# EUROPEAN PATENT SPECIFICATION

(11) **EP 3 989 610 B1**
(45) Date of publication and mention of the grant of the patent: **25.12.2024**
(21) Application number: 20202894.0
(22) Date of filing: 20.10.2020
(51) Int. Cl.: H04W 4/80

(54) **DEVICE, SYSTEM AND METHOD FOR CLUSTERING BLE DEVICES**
VORRICHTUNG, SYSTEM UND VERFAHREN ZUR GRUPPIERUNG VON BLE-VORRICHTUNGEN
DISPOSITIF, SYSTÈME ET PROCÉDÉ PERMETTANT DE REGROUPER DES DISPOSITIFS BLE

(43) Date of publication of application: 27.04.2022
(73) Proprietor: Televic Healthcare NV, 8870 Izegem (BE); Katholieke Universiteit Leuven, KU Leuven R&D, 3000 Leuven (BE); Interuniversitair Micro-Electronica Centrum (IMEC) vzw, 3001 Leuven (BE)
(72) Inventor: VIEREN, Frank, 8750 Zwevezele (BE); HALLEZ, Hans, B-8000 Brugge (BE); T'JONCK, Kristof, B-8600 Keiem (BE); CROMBEZ, Pieter, B-8820 Torhout (BE)
(74) Representative: IPLodge bv

(56) References cited:
- US-A1- 2009 232 047
- US-A1- 2015 304 833
- US-A1- 2018 376 527
- US-A1- 2019 273 798
- WONGIOT JIMMY: "Service Change on BLE GATT Table - jimmywongiot", 11 May 2020 (2020-05-11), XP055778648, Retrieved from the Internet <URL:https://jimmywongiot.com/2020/05/11/service-change-on-ble-gatt-table/> [retrieved on 20210223]

## Description

### Technical field

The present invention relates to a system and method for clustering Bluetooth low-energy (BLE) devices.

### Background

Bluetooth Low Energy (Bluetooth LE, colloquially BLE, formerly marketed as Bluetooth Smart) is a wireless personal area network technology designed and marketed by the Bluetooth Special Interest Group (Bluetooth SIG) aimed at novel applications in the healthcare, fitness, beacons, security, and home entertainment industries. Compared to Classic Bluetooth, Bluetooth Low Energy is intended to provide considerably reduced power consumption and cost while maintaining a similar communication range. Mobile operating systems including iOS, Android, Windows Phone and BlackBerry, as well as macOS, Linux, Windows 8 and Windows 10, natively support Bluetooth Low Energy.

BLE technology allows wireless communications between a large number of devices in a set-up where one device acts as a BLE central device ("BLE central" or "Central") and one or more devices act as BLE peripheral devices ("BLE peripheral" or "Peripherals"). Hereby, each Peripheral exchanges data with the Central in a secure manner. In order to allow such secure data exchange, the Peripheral and Central typically need to first perform a connection.

The number of Peripherals connecting to a Central can change substantially over time. Although the BLE technology is very versatile in (re-)connecting Peripherals with a Central, each connection procedure may lead to consumed power and loss of time, in particular when a connection has to be established between a Peripheral and a Central which have not been connected before or which have been configured to forget one another, e.g. for security reasons. In order to connect, a Peripheral broadcasts info about itself using advertising. The Central will scan for advertisements, and analyse the advertisements found in the scan result. Based on the advertisement result, the Central can decide to connect to an advertising Peripheral. It is not possible to connect to a Peripheral which is not advertising, even though one knows its address from before. This is because the Peripheral will only turn on the receiver for a set amount of time after transmitting an advertisement. This time is used to listen for connection requests and scan requests. In order to securely connect, some Peripherals and/or Centrals require the user(s) to input a security code into the corresponding device. For instance, in order to connect a smartphone to a board computer of a car, in order to allow hands-free telephone calls in the car, the board computer may generate and show a 4-, 5- or 6-digit security code on one of the car displays, which then needs to be entered into the smartphone to establish the connection. If security needs to be high, the board computer may be configured to repeat this procedure every time a smartphone wants to connect, even if the smartphone was connected previously.

One example where BLE devices need to connect, disconnect and/or reconnect regularly in a secured manner, can be found in hospitals. Hereby, certain BLE sensors and/or BLE monitoring devices for patients may be used which act as Peripherals to a Central. The Peripherals hereby can be requested to provide patient data to the Central, which can be used by a general patient monitoring system or which can be consulted by a caretaker. However, problems may occur when a patient has to be moved, because typically the Central cannot easily be moved with the patient, in contrast with the Peripherals. As BLE is a low-energy technology which uses wireless communication over relatively short ranges, typically contained within a room, the use of BLE devices for monitoring patients or to gather patient data may become cumbersome: all BLE devices which are monitoring the patient will need to be connected to a new Central if the patient is moved. Clearly this requires a technical intervention, and will take up time for both patient and caretaking personnel.

Document US 2018/0270643 A1 discloses a wireless communication module, which includes a wireless communication interface which is configured to operate at different times as a master device and as a slave device in separate communication relationships using the same communication protocol. The interface is also configured to switch back and forth between a master device mode and a slave device mode. Document WO 2019/129717 A1 discloses a method and a portable electronic device. The method comprises receiving, via a wireless communication interface capable of supporting paired interaction, a data packet from an aerosol provision device via a wireless communication network. The data packet contains information relating to at least one physical characteristic of the aerosol provision device. An identity of the aerosol provision device is determined based at least in part on the at least one physical characteristic of the aerosol provision device and an aspect of a user interface is changed based on the determined identity of the aerosol provision device. The system disclosed in these documents allow formation of a mesh of BLE devices which can be used to transmit BLE signals over longer ranges, and thus have Peripherals remain connected to a Central, even if the Central and Peripheral are far apart. However, such solution does not seem feasible for high data rates, and may also be very prone to interruptions of the data communication. Furthermore, this system is not mobile and does not allow clustering of BLE devices. Furthermore, the number and type of BLE Peripherals may change significantly over the course of time, which may make it difficult to keep track of which sensors provide which information about which patient. Note that in the above example, the data from the BLE Peripherals of multiple patients, possibly from multiple rooms, are gathered by the same Central, leading to high data transfer rate, to possible difficulties in making correct assessments of the data and problems in the event of a Central failure.

Document US 2018/376527 discloses a proxy device between BLE peripherals and a BLE central entity to transfer GATT profiles.

The present invention intends to overcome the problems described above. Hereto, the present solution relates to a device, method and a system for clustering BLE devices, which allows easy connection, disconnection and/or reconnection of a cluster of BLE devices, in particular Peripherals, to a Central.

### Additional background on BLE Technology

### 1. BLE: Central and peripheral roles

The GAP (Generic Access Profile) defines the discovery, connection and link management part of Bluetooth. Central and peripheral are both GAP roles. The GAP central is the one initiating a connection, as well as deciding on connection intervals and other connection parameters. Almost everything is initiated by the GAP central, for example connection parameters updates or pairing. Although a GAP peripheral can request the GAP central to perform these things, it is always up to the GAP central to decide what to do. The GAP peripheral begins its life cycle by advertising, and then responding to scan requests and connection requests from a GAP central.

### 2. Server and client roles

Server and client are GATT (Generic Attribute Profile) roles. These roles come into play once a connection has been established, and are not decided by the central and peripheral GAP roles. The GATT server can in general be described as the device sitting on information or data, while the GATT client is the one seeking this data. For instance, a heart rate sensor module is a typical GATT server, because it is the source of the heart rate data. A pulse watch or smartphone connecting to this heart rate device will be the GATT client, because it is the "data consumer". In the heart rate example, the GAP peripheral is the GATT server, and the GAP central is the GATT client. This is the most normal case, but it is not a rule. In the Apple Notification Center Service, the GAP peripheral (often a smartwatch) is the GATT client, because the data lies on the iOS device (GAP central and GATT server).

### 3. Connections in BLE

A GAP peripheral broadcasts info about itself using advertising. The GAP central will scan for advertisements, and analyse the advertisements found in the scan result. Based on the advertisement result, the GAP central can decide to connect to a advertising GAP peripheral. It is not possible to connect to a GAP peripheral which is not advertising, even though one knows its address from before. This is because the GAP peripheral will only turn on the receiver for a set amount of time after transmitting an advertisement. This time is used to listen for connection requests and scan requests. The connection requests sent from the GAP central contains connection parameters for the new connection: the connection interval tells the GAP peripheral how often they should communicate. The channel map describes which channels they shall communicate on, and in which order. The GAP peripheral does not respond to this request directly. If it accepts the connection, it will tune in to the right frequency at the right time. If it does this, the connection is established. The GAP central and GAP peripheral will continue to meet at the set channels and times as long as the connection is up. Either part can at any time disconnect actively by telling the other device. The other form of disconnection is when one device stops "meeting up" at the set channels and times. If a certain time passes since the last communication, the remaining device will have a disconnect event.

### 4. Service discovery protocol

The Service Discovery Protocol (SDP) addresses a specific requirement of Bluetooth operation: finding out what services are available on a connected device. An SDP layer acts like a service database. The local application is responsible for registering available services on the database and keeping records up to date. Remote devices may then query the database to find out what services are available and how to connect to them. A GATT profile describes what information should be registered with SDP based on the application implementation.

The Service Discovery Protocol (SDP) is used by a client device to find out about the services it can use on a server device. An SDP server maintains a database of services in a GATT profile; this is typically preconfigured (static). Once a database is in place, clients send SDP requests to query its contents, and servers reply with SDP responses giving details of services supported and information needed to connect to those services.

### 5. GATT Profile

The Generic Attribute (GATT) Profile specifies the structure in which profile data is exchanged. This structure defines basic elements such as services and characteristics, used in a profile. In other words, it is a set of rules describing how to bundle, present and transfer data using BLE services.

A service is a collection of data and associated behaviours to accomplish a particular function or feature. A service definition may contain mandatory characteristics and optional characteristics. Hence, a service is a collection of information, like e.g. values of sensors.

The Bluetooth Special Interest Group (Bluetooth SIG) has predefined certain services. For example they have defined a service called Heart Rate service. This simplifies making apps and firmware compatible with the standard Heart Rate service. However, this does not mean that one cannot make one's own heart rate sensor based on one's own ideas and service structures. Custom services may be made for custom applications.

A characteristic is a value used in a service along with properties and configuration information about how the value is accessed and information about how the value is displayed or represented. The characteristic is where the actual values and information are presented.

### 6. The Attribute Protocol (ATT)

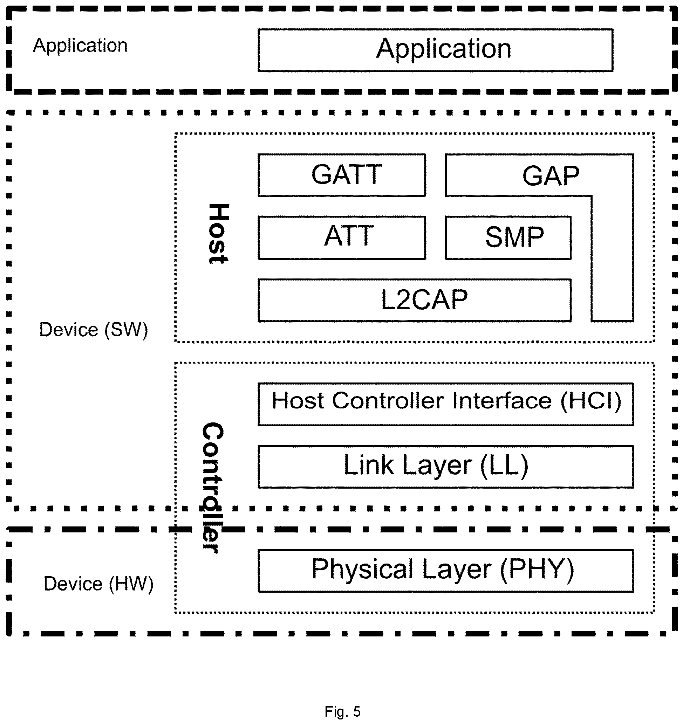

As shown figure 5, the BLE protocol is built upon a number of layers. Notice how the application layer is right above the GATT which in turn is built upon the ATT. The ATT is based on a Client <-> Server relationship. The server holds information like sensor values, the state of a light switch, position data, etc. This information is organized in a table, referred to as an attribute table. Each attribute in the table is a value or piece of information with some associated properties. So when a client wants the sensor data it refers to e.g. row 11 in the table. If it wants the state of the light switch it might refer to row 16, and so on.

The attribute protocol defines two roles; a server role and a client role. It allows a server to expose a set of attributes to a client that are accessible using the attribute protocol. An attribute is a discrete value that has the following three properties associated with it: (1) an attribute type, defined by a Universally Unique IDentifier (UUID), (2) an attribute handle, (3) a set of permissions that are defined by each higher layer specification that utilizes the attribute; these permissions cannot be accessed using the Attribute Protocol.

The attribute type specifies what the attribute represents. Bluetooth SIG defined attribute types are defined in the Bluetooth SIG assigned numbers page, and used by an associated higher layer specification. Non-Bluetooth SIG attribute types may also be defined.

An exemplary application is the Heart Rate Profile. In Table 1 each and every row is an attribute, and each attribute has a handle, a type, a set of permissions, and a value.

**Table 1:**

| Heart Rate Profile | Handle | Type of attribute (UUID) | Attribute permission | Attribute value |
|---|---|---|---|---|
| Service Declaration | 0x000E | **Service declaration** | Read Only, No Authentication, No Authorization | Heart Rate Service Ox180D |
| | | Standard UUIDservice 0x2800 | | |
| Characteristic Declaration | 0x000F | **Characteristic declaration** | Read Only, No Authentication, No Authorization | Properties (Notify) Value Handle (Ox0010) UUID for Heart Rate Measurement characteristic (0x2A37) |
| | | Standard UUIDcharacteristic 0x2803 | | |
| Characteristic Value Declaration | 0x0010 | **Heart Rate Measurement Characteristic** | Higher layer profile or implementation specific. | Beats Per Minute E.g. "167" |
| | | UUID found in the Characteristic declaration value 0x2A37 | | |
| Descriptor Declaration | 0x0011 | **Client Characteristic Configuration Descriptor (CCCD)** | Readable with no authentication or authorization. Writable with authentication and authorization defined by a higher layer specification or is implementation specific. | Notification enabled 0x000X |
| | | Standard UUIDservice 0x2800 | | |
| Charateristic Declaration | 0x0012 | **Characteristic declaration** | Read Only, No Authentication, No Authorization | Properties (READ) Value Handle (0x0011), UUID for Body Sensor Location (0x2A38) |
| | | Standard UUIDcharacteristic 0x2803 | | |
| Characteristic Value Declaration | 0x0013 | **Body Sensor Location** | Higher layer profile or implementation specific | Sensor Location (8-bit integer) E.g. 3 equals "Finger" |
| | | UUID found in the Characteristic declaration value 0x2A38 | | |

### 7. Attribute Handles

The attribute handle uniquely identifies an attribute on a server, allowing a client to reference the attribute in read or write requests. To simplify things then handle can be considered as the row number in the attribute table. Although the handle number might not be sequential. The handles are 16-bit numbers. From a programmer's perspective it is actually a quite effective way to pass values and information between functions. It makes it easy for your application to keep track of the attributes and to grab whatever information it needs. The handle numbers vary depending on how many attributes you have.

### 8. Attribute Types (UUIDs)

A Universally Unique ID (UUID) is a 16 or 128-bit value used to identify the type of every attribute. In Table 1 there are five different types of attributes; one of type "Service Declaration" (0x2800), two of type "Characteristic Declaration" (0x2803), one of type "Heart Rate Measurement Characteristic Value" (0x2A37), one of type "Body Sensor Location Characteristic Value" (0x2A38), and finally one of type "Descriptor Declaration" (0x2902). Six attributes in total. Note that there are more attribute types. The values given in the example of the table refer to UUIDs for standard services and standard characteristics as defined by the Special Interest Group (SIG) for BLE. Hereby the 16-bit numbers are embedded in the SIG standard 128-bit string 0000XXXX-0000-1000-8000-00805F9B34FB at the position of the "XXXX". However, the services and characteristics may also be user defined, in which case the UUID is still a 16-byte or 128-bit value, which can be easily be made to differ from SIG standard UUIDs.

### 9. Attribute Permissions

Permissions define some rules of how you can interact with a specific attribute. It defines whether an attribute should be readable and/or writeable and what kind of authorization is required to do the operations. Note that these permissions only apply to the attribute value, not the handle, type, and the permission field itself. This allows a client to look through a server's attribute table and discover what the server can provide. Although not necessarily read and write the values.

### 10. Attribute Values

The value can be anything. It can be a heart rate value measured in beats per minute, the state of a light switch, or a string like "Hello World". And sometimes it is information about where to find other attributes and their properties. For example, in the Service Declaration attribute in Table 1 (handle 0x000E) the value holds a UUID (0x180D) identifying what kind of service it is. The Characteristic Declaration value (handle 0x000F) holds information about the subsequent Characteristic Value Declaration (Properties, Handle, and Type). Finally, the Heart Rate Measurement Characteristic Value (handle 0x0010) eventually holds the actual number of heart beats per minute.

### Summary of the invention

The present invention concerns a method and a hub device for clustering BLE devices as defined in the independent claims.

It should be clear that the method and the hub device solve the problem of easy and secure (re)connecting a group of BLE peripherals, possibly a large group of BLE peripherals, to a central. The present invention solves this problem by using a hub device which acts as a type of gateway for these BLE peripherals for connection to a BLE central, i.e. the BLE peripherals do not have to be connected directly with the BLE central, they are connected to the hub device. Upon e.g. relocation of the group of BLE peripherals, they can remain connected to the hub device which relocates along with the BLE peripherals. Once relocated, only the hub device needs to be connected to the BLE central e.g. via a BLE access point to the BLE central at the new location. Clearly this solution:
- saves costs with respect to power (only the hub device neds to be reconnected to the BLE central, not all BLE peripherals separately), whereby the power consumption of the BLE peripherals is minimized;
- saves time for the user of the BLE system, because upon relocation only the hub device needs to be connected to the BLE central in a secure way. The secure connection between the BLE peripherals and the hub device may remain during the relocation, and
- allows to group a set of BLE peripherals without necessity of dedicated software at the BLE central. One could envision grouping BLE peripherals at the BLE central on the basis of e.g. the hardware address of the BLE peripherals. However, such system requires e.g. a database indicating which BLE peripheral belongs to which group and/or vice versa. In the present invention, the grouping is performed automatically: the BLE peripherals and the hub device they are connected are clustered together and the BLE central may communicate to the hub device without needing to know the exact BLE peripherals connected to the hub device. Notwithstanding this last remark, it may be possible in an embodiment of the present invention that the BLE central can acquire information on the BLE peripherals via the hub device. For instance, the hub device may be configured with a tracing service comprising characteristics whose value comprises information on one or more BLE peripherals connected to the hub device. This information may comprise identification data, location data, status data, etc. of these one or more BLE peripherals.

The above mentioned grouping is, as previously mentioned, particularly interesting in applications where a number of BLE devices logically belong together (for instance patient monitoring BLE sensors, which can be grouped per patient), and preferably also remain together, e.g. when they are re-located in group (for instance a patient being transferred with a group of patient monitoring BLE sensors from one room to another). Furthermore, the grouping of the BLE devices can be such that the data from/to the BLE devices can also be easily grouped and possibly analysed. Moreover, the clustering of information which logically belongs together allows for the possibility of generating services at the level of the hub, which depend on combining data of the connected BLE peripherals. For instance, a hub connected to a BLE peripheral which measures temperature and to a BLE peripheral which measures humidity, may be configured to offer an air quality service which offers a characteristic whose value can be determined taking into account the values of the characteristics offered by the temperature measurement BLE peripheral and by the humidity measurement BLE peripheral. Hence, in an embodiment of the present invention, the updated GATT profile comprises at least one aggregated service. Such aggregated service comprises at least one characteristic whose value depends on a combination of characteristic values of at least two BLE peripherals connected to the hub.

### Short description of the figures

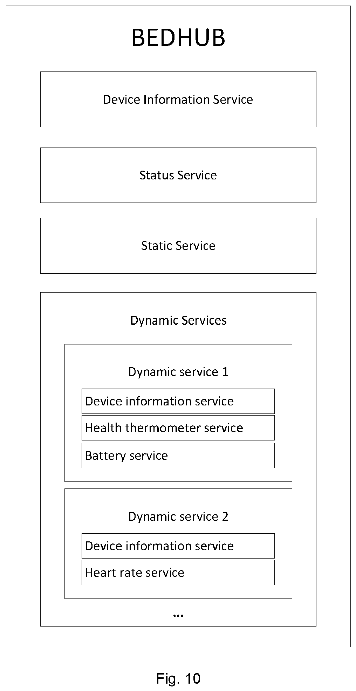

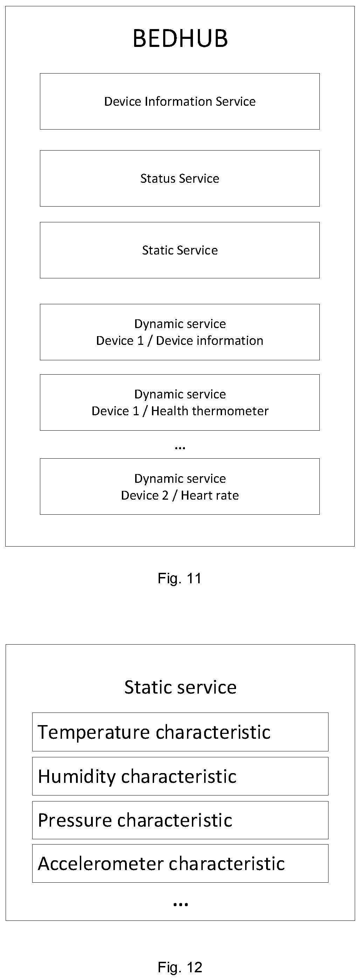

**Figure 1a** illustrates an embodiment of the invention, and in particular the process flow.
**Figure 1b** illustrates a similar embodiment of the present invention as figure 1a, with additional communication occurring between the BLE central ("Gateway") and a server system ("Server").
**Figures 2** **and** **3** illustrate two mapping schemes for mapping services of BLE devices connected to a hub to dynamic services of the hub which can be offered to the BLE central, in accordance with the present invention.
**Figure 4a** illustrates how the present invention may handle changes in BLE peripherals in time, whereby a fixed set of BLE peripheral devices are connected or disconnected over time to the hub ("HUB"). **Figure 4b** illustrates how the present invention may handle different setups of BLE peripherals, whereby a variable set of BLE peripheral devices are connected or disconnected to the hub ("HUB") in different setups.
**Figure 5** shows how the BLE protocol is built upon a number of layers.
**Figure 6** illustrates part of a possible process flow for connecting a hub to a BLE central in accordance with the present invention.
**Figure 7** illustrates part of a possible process flow for connecting a hub ("Bedhub") with a BLE peripheral ("Health Thermometer Sensor") on the one hand, and the hub and a BLE central ("Gateway") on the other hand, in accordance with the present invention. **Figure 8** illustrate a further part of the process flow for connecting the hub to another BLE peripheral and for allowing exchange of new additional peripheral GATT data between the hub and the BLE central.
**Figure 9** shows a possible system architecture of a sensor system in a nursing home.
An overview on how the Bluetooth low energy profile should look like is shown in **Figure 10****.** A profile like this is not possible as the Bluetooth stack does not support such a hierarchy. Because of the limitations of the Bluetooth Stack another service hierarchy like shown in **Figure 11** is present, in accordance with the present invention.
**Figure 12** shows how a set of static services may be structured on the hub.

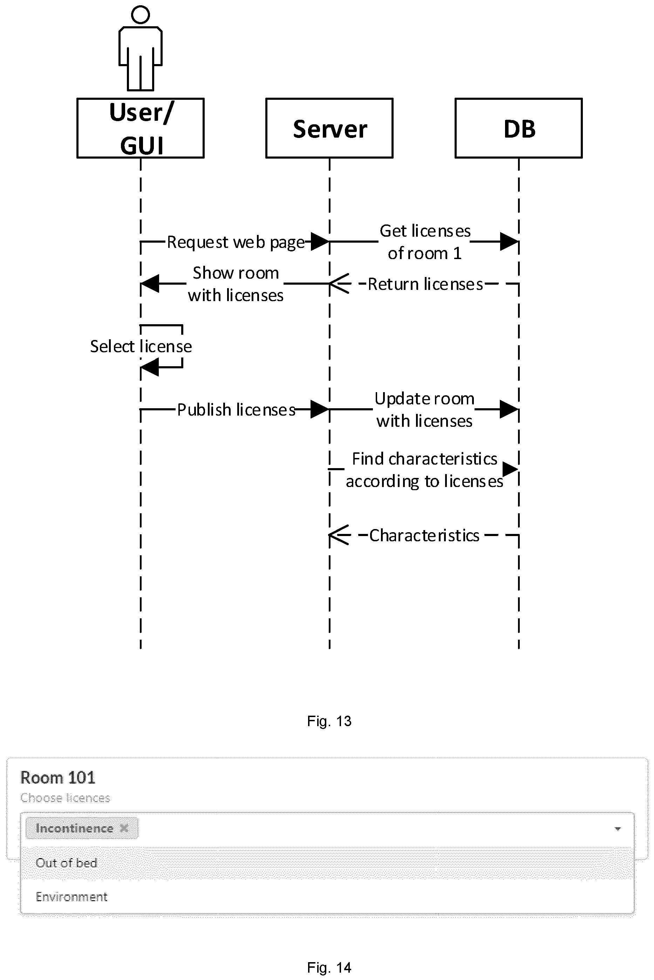

**Figure 13** illustrates a sequence diagram for allowing selection of licenses via a GUI, which may show the selected licenses as shown in **Figure 14****.**

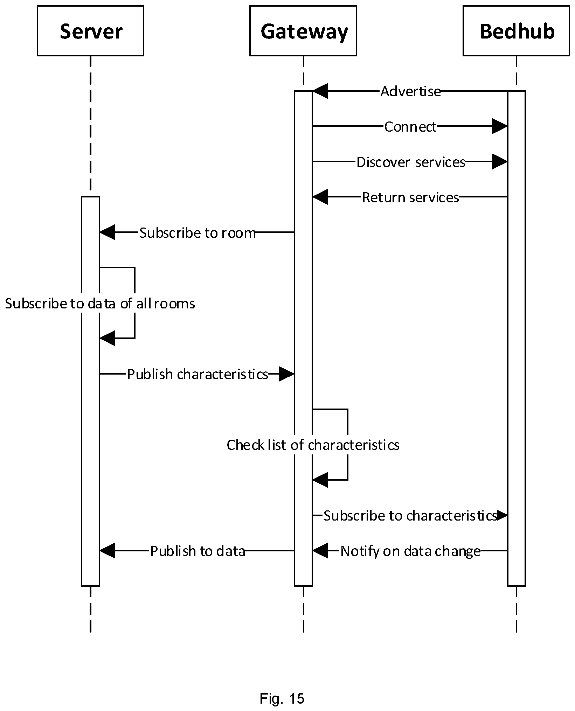

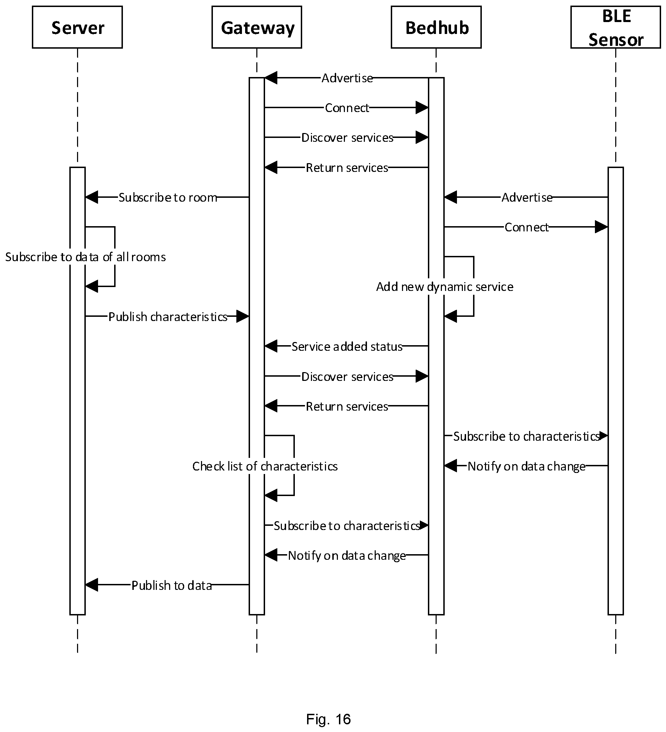

**Figure 15** illustrates how a Bedhub, which acts as a hub according to the present invention, connects to the Gateway, which acts as a Central according to the present invention, and how the Gateway in its turn may communicate with a server system ("Server") of a nursing home. **Figure 16** illustrates process flow when a BLE sensor is connected to the Bedhub, in accordance with the present invention.

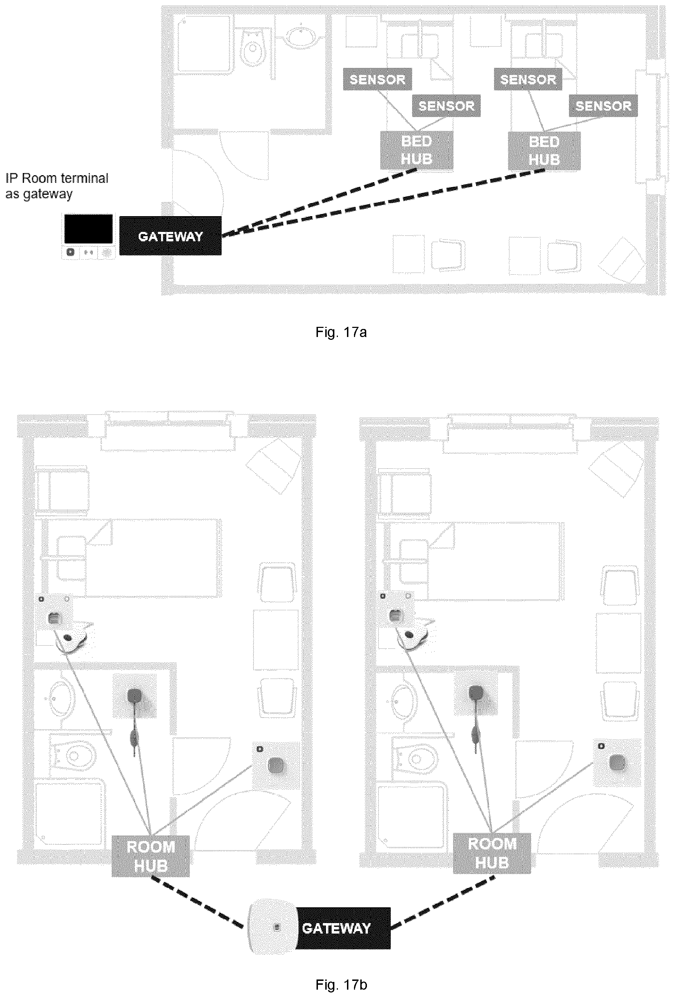

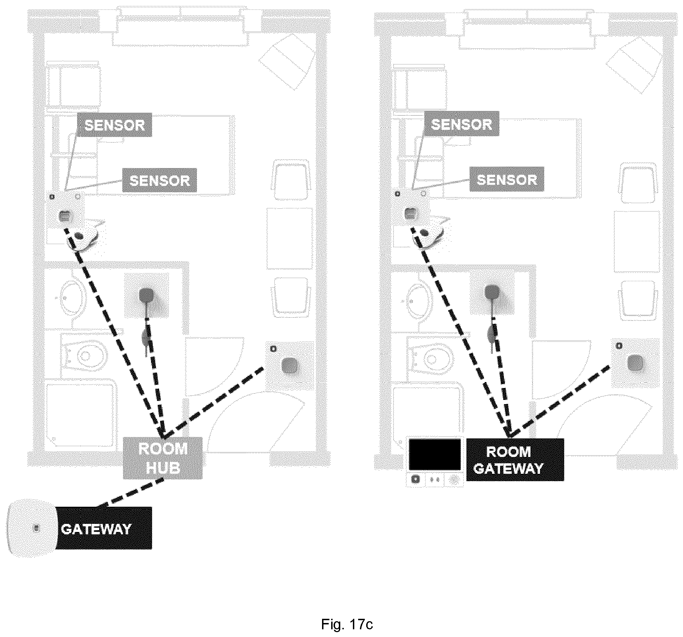

**Figures 17a, 17b** **and** **17c** show further exemplary embodiments of the present invention and how they can be implemented in e.g. a caring facility.

### Detailed description of the invention

The present invention and its embodiments relate to a method, a system, a hub device, a BLE central and a cluster as described in the section 'Summary of the invention', and in the claims. Further embodiments of the invention are discussed below.

As indicated before, in a preferred embodiment, the second set of BLE peripherals is different from the first set of BLE peripherals connected to the hub device. This embodiment can be used in the case an additional BLE peripheral is being connected to the hub device, or in the case a BLE peripheral is disconnected from the hub device. Note that disconnection of a BLE peripheral may comprise an explicit disconnection, whereby the BLE peripheral and/or the hub device explicitly disconnect, or an implicit disconnection, whereby the BLE peripheral and/or the hub device are configured to assume a disconnection in case certain conditions are met, for instance a predefined number of time-outs for a requested response.

In an embodiment of the present invention, the second set of BLE peripherals is the same as the first set of BLE peripherals connected to the hub device. This embodiment can be used in the case a configuration change occurs at one or more of the BLE peripherals. For instance, one of the BLE peripherals may be a second hub device according to the present invention, which acts as a GAP-peripheral to the first hub device. Hereby the first hub device acts as a GAP-central to the second hub device. This second hub device may for instance have updated its GATT profile. In that case, a change has occurred in the BLE peripherals of the first hub device, which requires an update of the GATT profile of the first hub device. This embodiment allows to construct a hierarchy of clusters.

In the present invention, the GATT profile of the hub is being altered. Therefore, the GATT profile of the hub can be called 'dynamic'. However, in a preferred embodiment, the GATT profile of the hub comprises a first set of services which is static and a second set of services which is dynamic. Herein, the static set of services refers to services which are always present on the hub, in particular when acting as a GAP-peripheral to the BLE central. The dynamic set of services herein comprise the services which depend on the BLE peripherals connected to the hub.

In a preferred embodiment, the static set of services comprises:
- a Device Information Service (DIS), which is a BLE standard service, and
- an Update Notification Service, also called Update Service, which is a user defined service. This service comprises an update status characteristic that changes state when services which are based on the services of each of the sub-peripheral devices are added or removed. The BLE central should restart the service discovery when the hub notifies the occurrence of an update in services by changing the state of this update status characteristic hosted by the Update Service.

In a preferred embodiment, the dynamic set of services comprises a variable set of user defined services. Each of these user defined services refers to at least one BLE peripheral device connected to the hub. In a more preferred embodiment, one or more standard services and/or one or more user defined services of BLE peripherals connected to the hub, is mapped into one or more user defined services of the hub. Hereby, the following mappings may be preferred:
(i) characteristics of each service of a BLE peripheral connected to the hub are mapped into characteristics of a corresponding user defined service on the hub. In this case, a service of the BLE peripheral which needs to be available to the BLE central, is mapped onto a corresponding service of the hub which has characteristics corresponding to characteristics of the service on the BLE peripheral;
(ii) characteristics of at least two services of a BLE peripheral are mapped into a user defined service of the hub which comprising characteristics corresponding to characteristics of said at least two services of the BLE peripheral. This mapping allows easy grouping of services of a BLE peripheral into a single service;
(iii) a hybrid mapping is performed for services with characteristics of a BLE peripheral into services with characteristics of the hub, whereby a first subset of services of a BLE peripheral is mapped in accordance with (i), and a second subset of services of a BLE peripheral is mapped in accordance with (ii).

The above mentioned mappings (i), (ii), (iii) of services with characteristics of BLE peripherals into services with characteristics of the hub can in an embodiment be performed in accordance with (i) for BLE peripherals of a first type, in accordance with (ii) for BLE peripherals of a second type and in accordance with (iii) for BLE peripherals of a third type. This allows optimizing the mapping for each BLE peripheral connected to the hub.

The services of one or more, and preferably all, BLE peripherals preferably comprise a fixed set of standard services and/or a fixed set of user defined services.

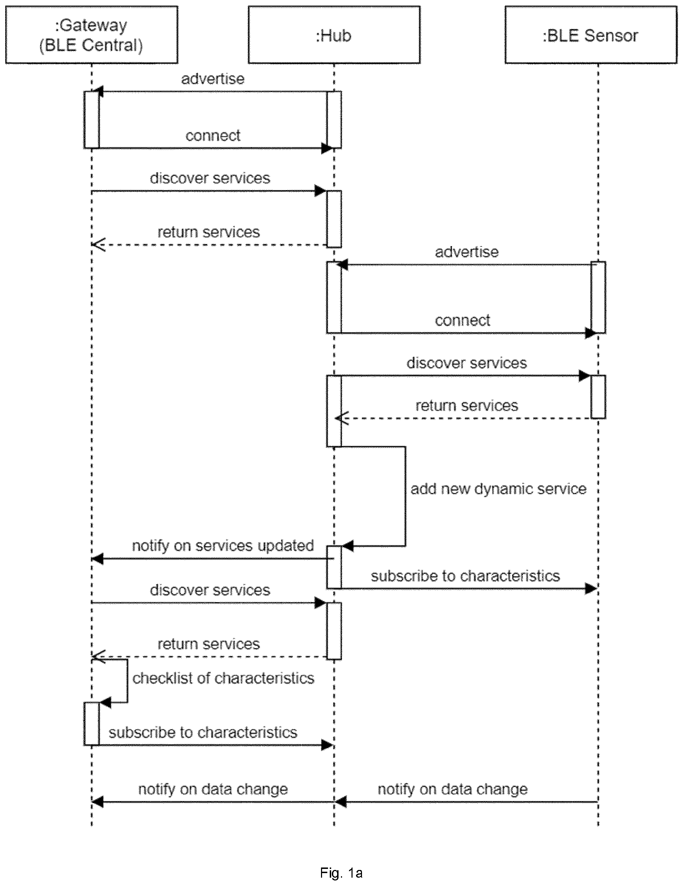

Figure 1a illustrates an embodiment of the invention, and in particular the process flow. A "Hub" advertises ("advertise") as a GAP peripheral. This advertising is responded to by a BLE central ("Gateway") and a connection is initiated ("connect"). The BLE central starts a service discovery protocol ("discover services"), which results in a communication from the hub to the BLE central of the services on the hub ("return services").

A first BLE peripheral ("BLE sensor") can be connected to the hub as follows: the BLE sensor advertises as a GAP peripheral ("advertise") and the hub responds to this advertising as a GAP central ("connect"). The hub may then start a service discovery protocol to obtain the services on the BLE peripheral as illustrated, or it may recognize the BLE peripheral from a previous connection and obtain the services of the BLE peripheral from memory. The connection of the BLE peripheral to the hub initiates the adding of one or more new dynamic services to the GATT profile of the hub ("add new dynamic service"). The addition of a new dynamic service on the hub is communicated to the BLE central ("notify on services updated"), triggering a new service discovery ("discover services"). In the illustrated embodiment, the procedure also involves the hub subscribing to the characteristics of the BLE peripheral ("subscribe to characteristics"). The updated set of services on the hub are communicated ("return services") to the BLE central.

Hereby preferably only services which have been added, removed or changed are communicated. The characteristics of these services can be checked ("check list of characteristics"). Hereby the Central may check if appropriate services are being offered. This procedure may be repeated if other BLE peripherals are connected to the hub. The procedure continues with the Central subscribing to the characteristics of the Hub ("subscribe to characteristics").

In the presently shown embodiment, the BLE peripheral acts as a GATT server, which is configured to notify the hub in the event of a change in the value of a characteristic ("notify on data change"). The BLE central has subscribed to characteristics of the hub ("subscribe to characteristics"), whereby the hub will act as a GATT server towards the BLE central, and such that the hub is configured to notify the BLE central in the event of a change in the value of a characteristic ("notify on data change").

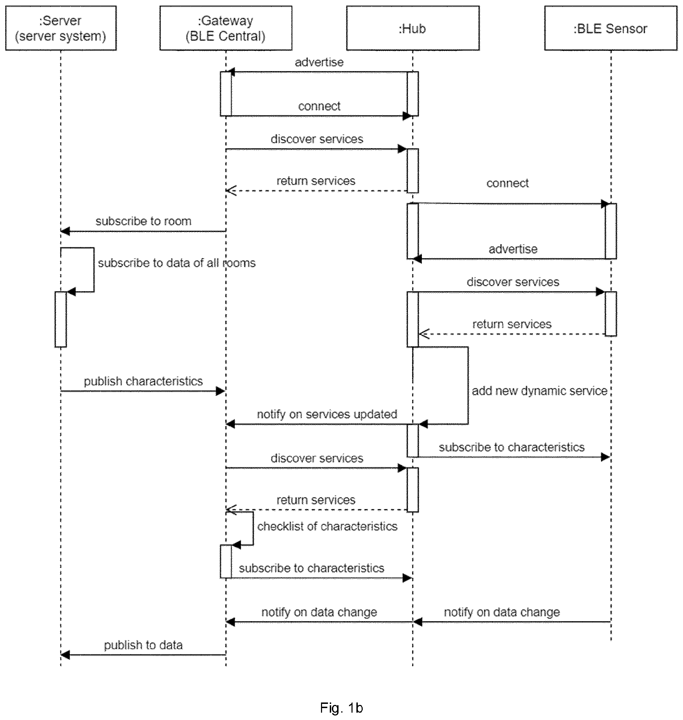

Figure 1b illustrates an embodiment of the present invention which extends figure 1a with additional communication occurring between the BLE central ("Gateway") and a server system ("Server"). Note that this communication may be wireless, for instance via WiFi or also via BLE, and/or Communication between BLE central and server system may be wired. In a preferred embodiment, communication between BLE central and server is performed using TCP/IP protocol. In this embodiment, communication between server system and BLE central comprises a step wherein the BLE central is identified at the server system ("subscribe to room"). This identification step may preferably comprise information regarding the one or more hubs connected to the BLE central. In the exemplary embodiment of a patient monitoring system in a hospital (see also further exemplary embodiments in this document), the hub may be connected to a patient's bed, which is moved into a room (e.g. recovery room after surgery). Hereby the room is provided with a BLE central which acts as a gateway to the hospital's server system. The identification step therefore may allow the hospital's server system to know that a certain patient has been moved into a certain room.

The server system may perform the identification step for all BLE centrals connected to the server system ("subscribe to data of all rooms").

The server system may then communicate to the BLE central which services and/or characteristics will be required, desired, restricted and/or allowed ("publish characteristics"). Alternatively, or additionally, the BLE central may communicate to the server system which services and/or characteristics are available. In the example of a patient monitoring system given above, such characteristics may include heart rate, O2 saturation level, etc. The BLE central can then check if these characteristics are available, e.g. by performing a service discovery at the hub. If the characteristics are indeed available, the BLE central may subscribe to these characteristics at the hub ("subscribe to characteristics"), and if a change occurs in the data, the BLE central may communicate these data to the server system ("publish to data"). Alternatively, or additionally, the server system may communicate to the BLE central a list of services which are restricted and/or allowed. This is particularly useful in order ensure that only allowed services will be used, e.g. on the basis of licences. Note that this can be applied centrally.

The present invention is particularly versatile in grouping BLE peripherals:

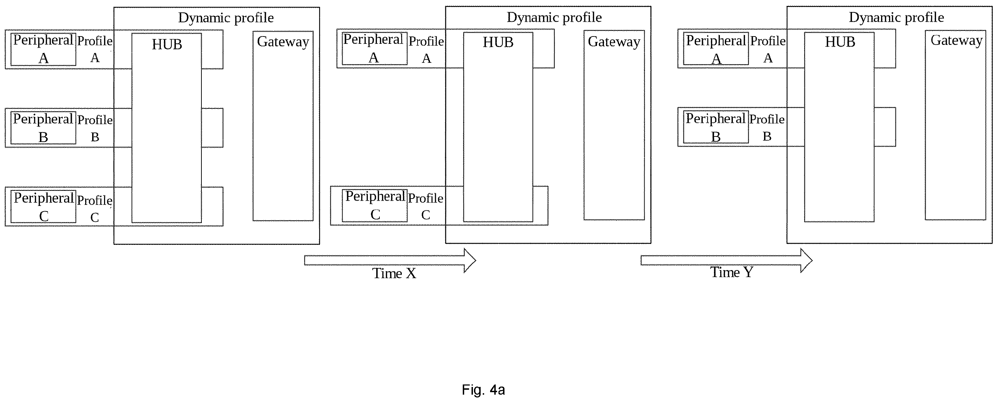

- Figure 4a illustrates how the present invention may handle changes in BLE peripherals in time, whereby a fixed set of BLE peripheral devices ("Peripheral A", "Peripheral B" and "Peripheral C") are connected or disconnected over time to the hub ("HUB"). At time 0, A, B and C are present. After time X only A and C are present. After time Y, A and B are present. Hereby, the hub remains connected to BLE central ("Gateway"), with a GATT profile which is updated when a change of connected BLE peripherals occurs ("Dynamic Profile").

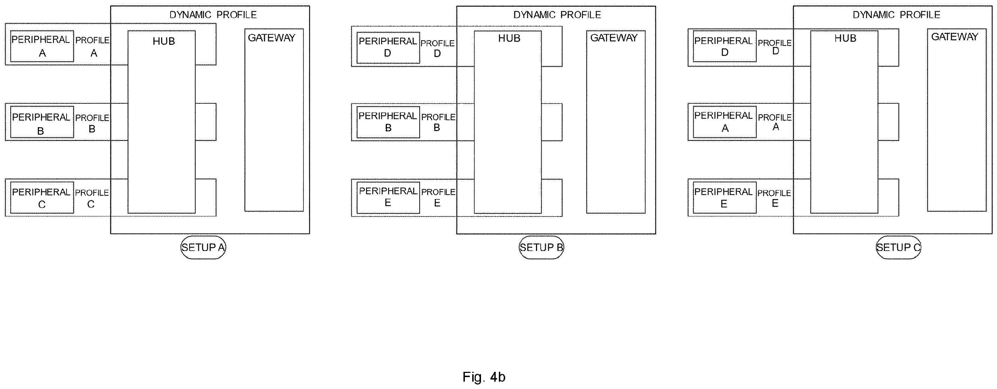

- Figure 4b illustrates how the present invention may handle different setups of BLE peripherals, whereby a variable set of BLE peripheral devices ("Peripheral A", "Peripheral B", "Peripheral C" , "Peripheral D" and "Peripheral E") are connected or disconnected to the hub ("HUB") in different setups. Setup A consists of Periphals A, B and C. Setup B consists of Peripherals B,D, and E. Setup C consists of Peripherals A,D and E. Hereby, the hub may remain connected to BLE central ("Gateway"), with a GATT profile which is communicated to the BLE central for a certain setup ("Dynamic Profile").

Hence, the present invention allows to group BLE peripherals for both cases above, by allowing the GATT profile of the hub to be updated.

In the present invention, the set of services of the GATT profile of the hub are at least partially related to the set of BLE peripherals which are connected to the hub device. Those services on the hub which are indeed related to the set of BLE peripherals which are connected to the hub device, may therefore change, and can be called dynamic services. A dynamic service is not a standard Bluetooth SIG service, and must define a vendor specific UUID.

A vendor specific UUID has 128 bits (16 bytes) and may not contain the following bytes at the end (in hexadecimal digits): 1000-8000-00805F9B34FB.

In a preferred embodiment of the present invention, the user defined services and/or user defined characteristics may comprise a vendor specific UUID which can be represented as XXXXXXXX-YYYY-ZZZZZZZZ-MMMMMMMMMMMM, wherein X, Y, Z and M are hexadecimal digits. The representation can be illustrated as follows:

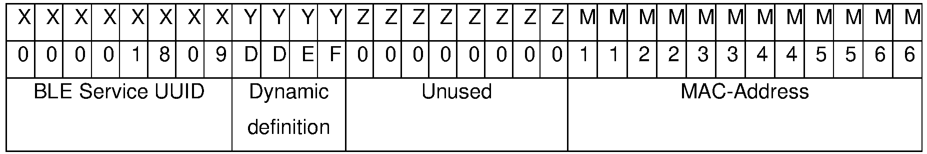

wherein the first row relates to the preferred representation of the UUID of user defined services and/or characteristics within the context of the present invention, the second row provides an example, and the third row indicates an indication of the meaning of the bytes in the UUID.

The first four bytes ("XXXXXXXX") are preferably used to determine the standard SIG Bluetooth Low Energy service or characteristic used in the connected BLE peripheral. In the above example, the service is the Bluetooth SIG specified Health thermometer service with 0x1809 as the first 4 bytes. If no standard SIG Bluetooth Low Energy service or characteristic is used in the connected BLE peripheral, a value not previously used for a standard SIG BLE service or characteristic can be used.

The next two bytes (bytes 5 to 6) preferably determine if the service is dynamic or if the characteristic belongs to a dynamic service. In the example, we have used 0xddef as the value for these bytes, which indicates that the UUID is used in connection with the present invention, and thus is used in a dynamic GATT profile for a service or characteristic which can be altered.

The next 4 bytes (bytes 7 to 10) do not necessarily have to be used, but may in a preferred embodiment of the present invention, be used to define the service or characteristic further.

The last 6 bytes can preferably be used for setting the Bluetooth-address (MAC-address). This will make sure the dynamic service is unique for the dynamic profile. This is necessary when multiple BLE peripherals offer the same service, e.g. the same BLE SIG Service.

### Exemplary embodiments

The following exemplary embodiments illustrate the present invention and present further preferred embodiments. Note that the features disclosed in these exemplary embodiments may be applied more generally and are not intended to be limited to the exemplary embodiments in which they are disclosed.

### Exemplary embodiment 1: patient monitoring system in a hospital

A patient in a hospital may need to be monitored continuously or at regular intervals with respect to a number of parameters.

The patient's heart rate may be monitored by a first heart rate sensor. This first heart rate sensor may be a first BLE peripheral attached to the chest of the patient.

The patient's heart rate may be monitored by a second heart rate sensor. This second heart rate sensor may be a second BLE peripheral attached to another part of the chest of the patient.

The patient's O2-saturation level may be monitored by an O2 saturation level sensor attached to the fingertip of the patient. This O2 saturation sensor may be a third BLE peripheral attached to the fingertip of the patient. Furthermore, this sensor may also monitor the heart rate of the patient.

The BLE peripherals are connected to a hub device, which can be located on or near the patient's bed. The hub device can already be connected as a GAP-peripheral to a BLE central. Prior to the connection of the BLE peripherals to the hub device, the GATT profile of the hub device comprises an update notification service with an update status characteristic.

The connection between the BLE peripherals and the hub device can be done securely when the nurse has attached the peripherals to the patient in the correct manner.

Connecting the BLE peripherals to the hub device triggers the hub device to update its GATT profile in an embodiment according to the present invention. The value of the update status characteristic is also changed.

The value of the update status characteristic is communicated to the BLE central, for instance via a push notification of the update status characteristic value to the BLE central. The BLE central starts a service discovery with the hub device. This service discovery is preferably started without changing the connection between the BLE central and the hub device, i.e. using the existing connection. During service discovery, the updated GATT of the hub is communicated to the BLE central. The update status characteristic on the hub is hereby reset. The BLE central then may use a new set of services, preferably including services related to the BLE peripherals connected to the hub. Note, however, that the BLE central does not have to communicate to the BLE peripherals directly, but may exchange data with the BLE peripherals via the hub.

When a new BLE peripheral is advertising in the neighbourhood of the hub, a connection between this new BLE peripheral and the hub can be established. A service discovery between the new BLE peripheral and the hub follows. Hereby the hub device at least partially incorporates the services of the new BLE peripheral into an updated GATT profile, and again may change the update status characteristic value. Again, the value of the update status characteristic is communicated to the BLE central, for instance via a push notification of the update status characteristic value to the BLE central. The BLE central starts a service discovery with the hub device, and receives the updated GATT profile. The BLE central may then use the set of services in the updated GATT profile, including services related to the new BLE peripheral connected to the hub. Since the BLE peripherals communicate to the Central via the hub, it is clear that these BLE peripherals can be clustered.

### Exemplary embodiment 2: mapping scheme (ii)

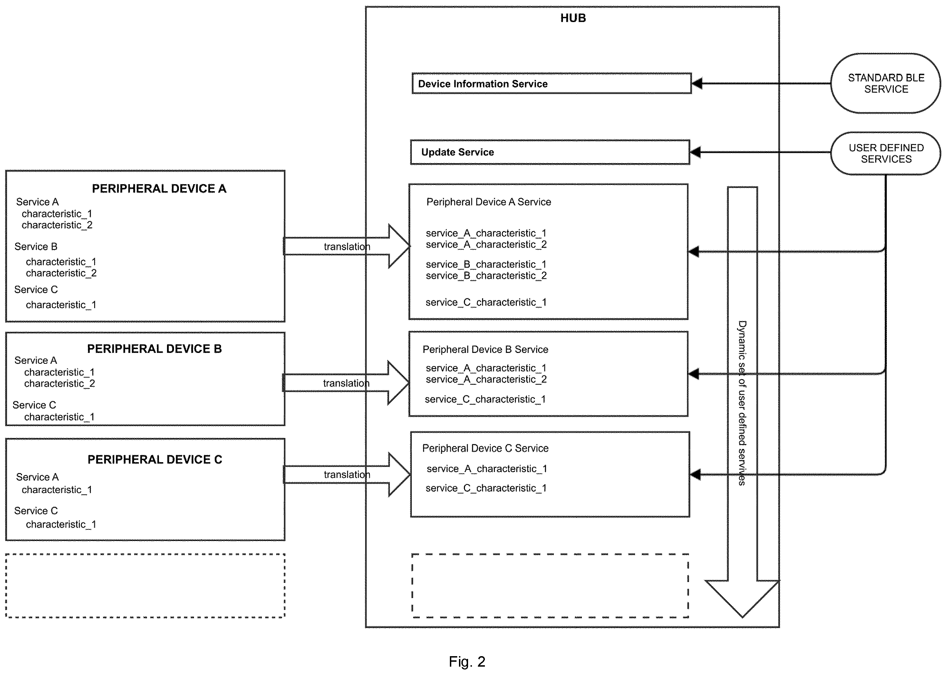

Mapping scheme (ii) is illustrated in figure 2. Figure 2 shows a set of three BLE peripherals, which in the figure are termed "Peripheral Device" (A, B and C) on the left side. Each Peripheral Device comprises a number of services, each having at least one characteristic. For instance, Peripheral Device A comprises 3 services: Service A, B and C, whereby Service A comprises two characteristics (characteristic_1, characteristic_2), Service B comprises two characteristics (characteristic_1, characteristic_2), and Service C comprises one characteristic (characteristic_1), totalling 5 characteristics. The services on the BLE peripherals can be standard services, user defined services or a combination thereof.

The BLE peripherals are connected to the hub ("HUB"). The hub comprises a set of static services:
- a Device Information Service, which is a standard service, and
- an Update Service, which is an update notification service as disclosed earlier in this document, and which is a user defined service,
and a set of dynamic services, comprising a service for each connected BLE peripheral: Peripheral Device A, Peripheral Device B and Peripheral Device C services. Peripheral Device A service hereby comprises a set of characteristics which correspond one-on-one with the characteristics of the services of Peripheral Device A. As Peripheral Device A comprises in total 5 characteristics, Peripheral Device A Service on the hub comprises also 5 characteristics. Analogously, Peripheral Device B Service on the hub comprises 3 characteristics and Peripheral Device C Service on the hub comprises 2 characteristics.

### Exemplary embodiment 3: mapping scheme (i)

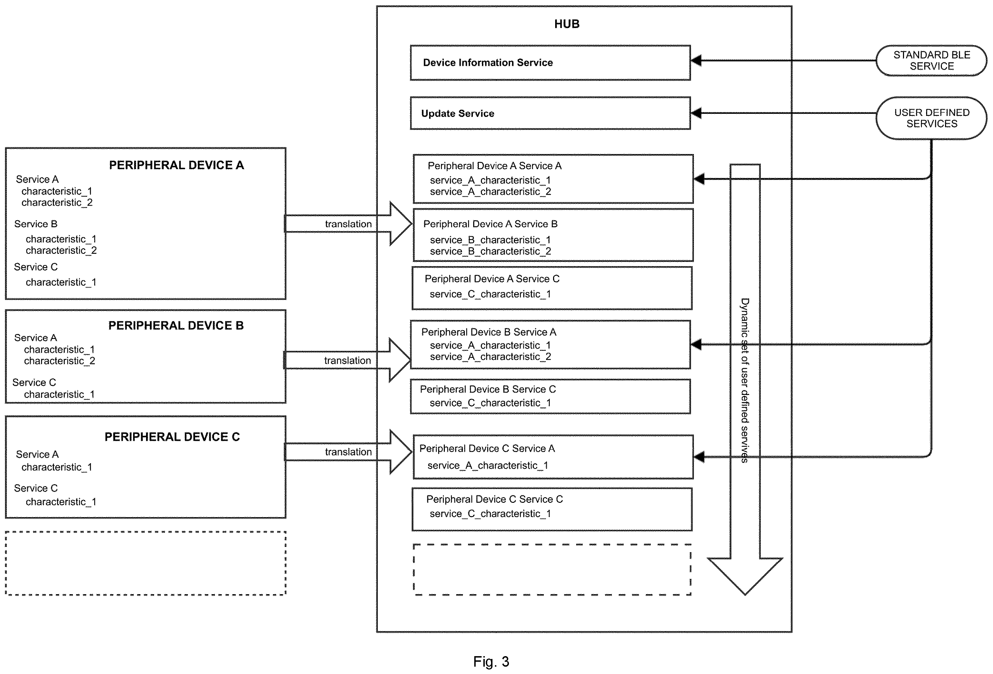

Mapping scheme (i) is illustrated in figure 3. Figure 3 shows a set of three BLE peripherals, which in the figure are termed "Peripheral Device" (A, B and C) on the left side. Each Peripheral Device comprises a number of services, each having at least one characteristic. For instance, Peripheral Device A comprises 3 services: Service A, B and C, whereby Service A comprises two characteristics (characteristic_1, characteristic_2), Service B comprises two characteristics (characteristic_1, characteristic_2), and Service C comprises one characteristic (characteristic_1), totalling 5 characteristics. The services on the BLE peripherals can be standard services, user defined services or a combination thereof. The left part of fig. 3 regarding the BLE peripherals is the same as in fig. 2.

The BLE peripherals are connected to the hub ("HUB"). The hub comprises a set of static services:
- a Device Information Service, which is a standard service, and
- an Update Service, which is an update notification service as disclosed earlier in this document, and which is a user defined service,
and a set of dynamic services. Contrary to the mapping scheme illustrated in fig. 2, the set of dynamic services here comprise a service for each service on each connected BLE peripheral: the 3 services on Peripheral Device A are mapped into 3 services on the hub: Peripheral Device A Service A, Peripheral Device A Service B and Peripheral Device A Service C, each of these 3 services comprising corresponding characteristics as Service A, Service B and Service C on Peripheral Device A respectively. Analogously, the two services on Peripheral Device B are mapped into two services on the hub with corresponding characteristics and the two services on Peripheral Device C are mapped into two services on the hub with corresponding characteristics.

### Exemplary embodiment 4: Process flow of the GATT data

In the present embodiment, the startup sequence of all the 4 devices present in the flow is not important. Three phases are defined to illustrate how the dynamic GATT profile plays its role in the complete chain before sensor data can flow from the BLE peripherals (e.g. BLE sensors), to the BLE central ("Gateway"). These phases are:
- Phase I will illustrate how the BLE central ("Gateway") connects to a hub ("Bed Hub") that will contain next to its standard SIG services (e.g. Device Information Service) possibly one or more user defined services depending on the BLE peripherals, which are typically BLE sensors, connecting to the Bed Hub.
- Phase II will illustrate how the Bed Hub extends its standard services with two user defined services which are based on two discovered services to his interest (DIS and Health Thermometer Service) provided by the BLE peripheral, which is a BLE device measuring the health temperature, and how the Bed Hub will notify the Gateway it has a newly added user defined service.
- Phase III will illustrate, as in Phase II, how the Bed Hub extends its standard and user defined services (based on the DIS and Health Thermo Services from the Health Thermometer Sensor) with 2 extra user defined services based on two newly discovered services to his interest (DIS and Heart Rate Service) provided by another BLE peripheral, which is a BLE device measuring the heart rate.

### a) Phase I Connection between Gateway and Bed Hub to get the Update Service

In the present embodiment, both BLE devices have been paired and bonding information is present on both devices. This means when both devices reconnect no new pairing process is required, a secure connection between both devices will be established automatically.

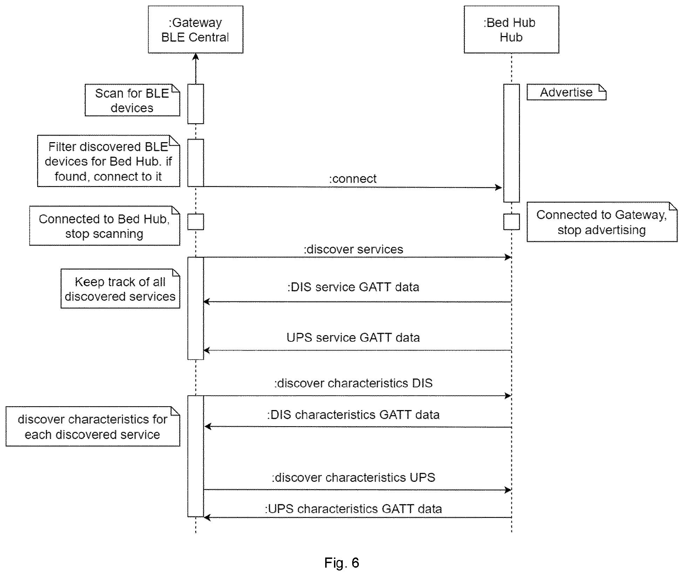

We refer to figure 6 for illustrating the process flow:
- The Gateway scans for BLE devices and the Bed Hub advertises.
- The Gateway filters the BLE devices it discovers, and connects to the Bed Hub when found.
- Once the Bed Hub is found and connected to, the Gateway may stop scanning. Alternatively, the Gateway may continue scanning for other Bed Hubs. Once the Bed Hub is connected to the Gateway, the Bed Hub preferably stops advertising.
- A service discovery protocol is initiated wherein the Gateway discovers the services on the Bed Hub. The Bed Hub sends DIS service GATT data and update notification service (also called "Update Service" or "UPS") GATT data to the Gateway. The Gateway keeps track of these services.
- For each discovered service, the Gateway needs to discover the characteristics. In the present case the GATT data for the characteristics for the DIS service and for the UPS service need to be communicated from the Bed Hub to the Gateway. The UPS service comprises an update status characteristic, e.g. a "new service state" characteristic which changes when a new service is added and/or removed.

As a result, the Gateway will have the Update Service providing the necessary characteristics to see if new user defined services were added to the Bed Hub and must be discovered for further usage when sensor data needs to be exchanged.

### b) Phase II: Connection between Bed Hub and Temperature Sensor Peripheral and exchange of new service/characteristic GATT data from Temperature Sensor Peripheral between the Bed Hub and the Gateway

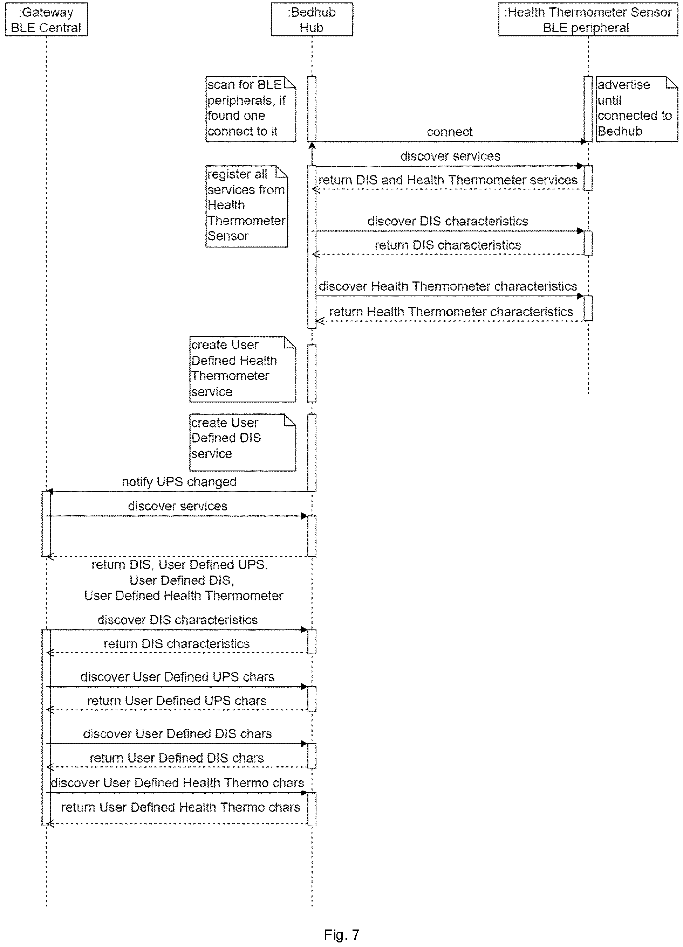

We refer to figure 7 for illustrating the process flow:
- The Bed Hub scans for BLE peripheral devices. The Health thermometer sensor peripheral advertises.
- The Bed Hub may filter the discovered BLE devices and may find and connect to the thermometer sensor.
- Once the Bed Hub is connected to the thermometer sensor, it may stop scanning, it may stop scanning for a thermometer sensor or it may continue scanning. In the present embodiment, the Bed Hub stops scanning. The thermometer sensor stops advertising.
- A service discovery is initiated. DIS GATT data and Health Thermometer service GATT data are communicated from the thermometer sensor to the Bed Hub. The Bed Hub keeps track of these services.
- For each discovered service, the Bed Hub needs to discover the characteristics. In the present case the characteristics for the DIS service and for the Health Thermometer service need to be communicated from the thermometer sensor to the Bed Hub.
- The Bed Hub creates new user defined services: "Health Thermometer" service and a "DIS" service. These new user defined services are added to the GATT profile of the Bed Hub.
- The update status characteristic of the UPS service on the Bed Hub is changed, and the change is notified to the Gateway.
- The Gateway now initiates a service discovery. The DIS GATT data, the user defined UPS service, the user defined DIS service (for the Health Thermometer Sensor) GATT data and the user defined Health Thermometer service GATT data are communicated from the Bed Hub to the Gateway. The Gateway keeps track of all discovered user defined services.
- For each discovered user defined service, the Gateway needs to discover the characteristics. In the present case the GATT data for the characteristics for the DIS service of the hub, for the user defined UPS service, for the user defined DIS service for the Health Thermometer service and for the user defined Health Thermo service need to be communicated from the Bed Hub to the Gateway.

As a result, the Bed Hub has a new user defined service based on the standard SIG defined Temperature Service that can be discovered by the Gateway via the Update Service.

The user defined "Health Thermometer" service and the user defined "DIS" service for the Health Thermometer Sensor will have vendor specific UUIDs, which can preferably be defined as follows:
The dynamic service "Health Thermometer" service is discovered from the BLE sensor Health Thermometer BLE peripheral which has the BT-address (MAC-address) EF::33::1A:55:12:FE. The UUID of this service can then be: 00001809-DDEF-0000-0000-EF331A5512FE. Hereby, the first 4 bytes (00001809) are the same as for the standard SIG BLE service for Health Thermometer service. The UUID for the characteristic of the Health Thermometer service is the same as the BLE standard SIG UUID for the Temperature characteristic: 00002A6E-0000-1000-8000-00805F9B34FB. Note that, although the service is used defined, the characteristic does not have to be user defined. In the present invention, it is preferred that a characteristic of a service on a BLE peripheral, which characteristic has a standard SIG BLE UUID, is mapped into a characteristic of a service on the hub with the same standard SIG BLE UUID.

The dynamic service "DIS (Health Thermo Sensor)" service is discovered from the BLE sensor Health Thermometer BLE peripheral which has the BT-address (MAC-address) EF::33::1A:55:12:FE. The UUID of this service can then be: 0000180A-DDEF-0000-0000-EF331A5512FE. Hereby, the first 4 bytes (0000180A) are the same as for the standard SIG BLE service for DIS service of this BLE peripheral.

### c) Phase III: Bed Hub connecting to another BLE peripheral and exchange of new additional peripheral GATT data between the Gateway and the Bed Hub

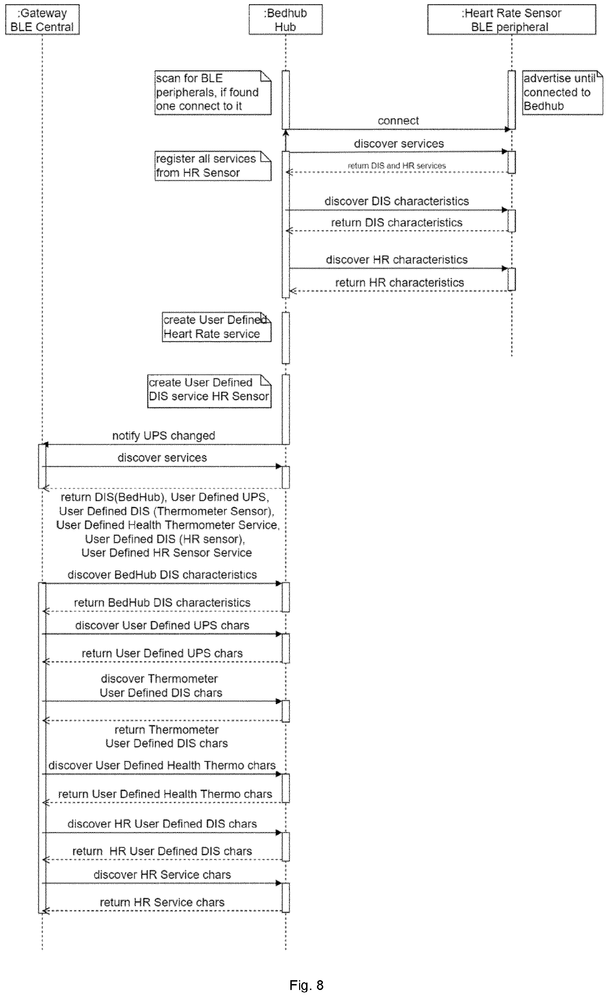

We refer to figure 8 for illustrating the process flow:
- The Bed Hub scans for BLE peripheral devices. The Hearth Rate (HR) Sensor BLE peripheral advertises.
- The Bed Hub may filter the discovered BLE devices and may find and connect to the HR sensor.
- Once the Bed Hub is connected to the HR sensor, it may stop scanning, it may stop scanning for a HR sensor or it may continue scanning. In the present embodiment, the Bed Hub stops scanning. The HR sensor stops advertising.
- A service discovery is initiated. DIS GATT data and HR service GATT data are communicated from the HR sensor to the Bed Hub. The Bed Hub keeps track of these services.
- For each discovered service of the HR sensor, the Bed Hub needs to discover the characteristics. In the present case the characteristics for the DIS service and for the HR service need to be communicated from the HR sensor to the Bed Hub.
- The Bed Hub creates new user defined services: "Heart Rate" service and "DIS service HR Sensor". These new user defined services are added to the GATT profile of the Bed Hub.
- The update status characteristic of the UPS service on the Bed Hub is changed, and the change is notified to the Gateway.
- The Gateway now initiates a service discovery. The DIS GATT data of the Bed Hub, the user defined UPS service GATT data, the user defined DIS (for the Thermometer Sensor and the HR Sensor) service GATT data, the user defined DIS (for the Health Thermometer Sensor and the HR Sensor) service GATT data, the user defined Health Thermometer service GATT data and the user defined HR service GATT data are communicated from the Bed Hub to the Gateway. The Gateway keeps track of all discovered user defined services.
- For each discovered user defined service, the Gateway now initiates a discovery of the characteristics. In the present case the GATT data for the characteristics for the DIS for the Bed Hub, for the user defined UPS service, for the user defined DIS service for the Health Thermometer Sensor, for the user defined DIS service for the HR Sensor, for the user defined Health Thermometer service and for the user defined HR service need to be communicated from the Bed Hub to the Gateway.

As a result, the Bed Hub has now 4 user defined services: two based on the standard SIG Device Information Service, one based on the standard SIG defined Temperature Service (Defined in the Temperature Profile) and another one based on the standard SIG defined Heart Rate Service. The characteristics of each service will be a mapping of the standardized GATT characteristics as defined in the SIG service for Temperature, Heart Rate and Device Information.

The user defined service "HR" service will have a vendor specific UUIDs, which can preferably be defined as follows:
The dynamic service "HR" service is discovered from the Heart Rate BLE peripheral with BT-address (MAC-address) AA:03::EA:57:12:FE. The UUID of this service can then be: 0000180D-DDEF-0000-0000-AA03EA5712FE. Hereby, the first 4 bytes (0000180D) are the same as for the standard SIG BLE service for Heart Rate service. The UUID for the characteristic of the HR service is the same as the BLE standard SIG UUID for the HeartRate measurement characteristic: 00002A37-1000-8000-00805F9B34FB. As indicated before, although the service is used defined, the characteristic does not have to be user defined.

### Exemplary embodiment 5: nursing home

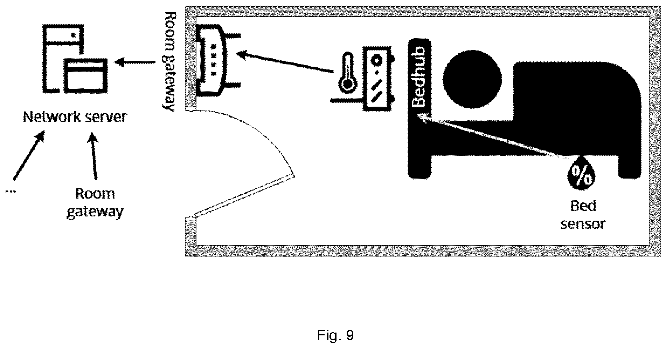

The following exemplary embodiment applies the present invention in a nursing home. A nursing home typically has a lot of rooms. Each resident has his own personal room with his own bed. To make it possible to add sensors based on the resident, an architecture is designed per room. Figure 9 shows a possible system architecture of a sensor system in a nursing home.

In each room, bed sensors are attached or embedded in the bed. These sensors can have a wired or wireless connection to the Bedhub, which is a hub in accordance with the present invention. The Bedhub connects to a room gateway via Bluetooth low energy. The room gateway may be configured to preprocess data sent to and/or received from the Bedhub, and/or to send the data to a central network server.

The architecture may contain a lot of devices such as bed sensors (which are BLE peripherals), a bed hub (which is a hub according to the present invention), a room gateway (which is a Central according to the present invention and acts as a GAP-central to the Bedhub) and the network server, which is the server system installed in the nursing home.

The bed sensors are BLE peripheral sensors which are related to the bed. Two kinds of sensors can be distinguished, based on the way they are connected to the Bedhub:
- Wired bed sensors which can be embedded or stand-alone:
   o Embedded bed sensors are devices which are embedded into the bed.
   o Stand-alone sensors are devices which separately can measure parameters around the bed. These sensors can be attached to the bed, e.g. a temperature sensor clipped onto the bedside.
   Wired bed sensors can be directly connected to the bed, and can be used for instance to provide information about bed status (e.g. position and direction of the bed) or to perform out-of-bed detection of a patient.
- Wireless bed sensors are devices that communicate wirelessly over Bluetooth Low Energy. These sensors preferably use a secure connection. The connection is set up by a pairing scheme, where keys are exchanged. These keys are used to encrypt further communication.

The bed hub is an embedded device that is integrated in the bed. It acts as a gateway where all sensors related to the bed are relayed to. These sensors can be integrated into the bed with a wired connection or attached to the bed via a wired or wireless connection. The collection of this kind of sensors is called the 'bed sensors'. To structure data received from any of the bed sensors in Bluetooth Low Energy, two kinds of services are distinguished:
- A static service is a service which defines characteristics which always must be in the system. Static services always include services based on the wired bed sensors; this means all physical attached sensors. This is the default setup for each bed in order to support a fixed list of services at design time that will always be supported, whether they are activated may depend on the software.
- A dynamic service is a BLE service where characteristics are added dynamically. Each time a sensor is added to the Bedhub it adds a new characteristic according to the sensor which has been added to the system. The wireless bed sensors which are BLE peripherals can be added in this fashion.

The room gateway is the central point where all sensors connect to in a single room, including the bedhub and the room sensors. The room gateway thus acts as a Central in accordance with the present invention. Each room contains one room gateway and can be appointed to a specific resident. The room gateway will have the responsibility that the right sensors and only the trusted sensors are connected, by managing and authorizing the different sensors in the specific room. This device is responsible to map the available services exposed in the room with the required services for the application.

The room gateway supports connected BLE devices such as the Bedhub, but also broadcast devices under the condition that these broadcast messages can be parsed.

To control the connections and data transfer, the room gateway is connected with a central network server. This connection can preferably be established via an internet connection over WiFi or Ethernet.

The network server is a central control device that controls all gateways from each room. Here connections can be added or deleted. An overview of all connections is kept here. In order to do these tasks a database is used containing multiple tables:
- A table of characteristics is a list where all BLE characteristics are listed together with their type of data. Each characteristic has a Universally Unique Identifier (UUID) which is used to define the BLE characteristics in the Bedhub.
- A table of licenses is a list of licenses that residents can subscribe to. Each license needs a number of characteristics in order to be able to use that license. E.g. the incontinence license could need temperature, humidity and NH3 sensor data. Each of these parameters has a characteristic.
- The table of sensors is a list of devices that the network server trusts. Each sensor has one or more characteristics.
- The list of rooms is a list of all the rooms of the nursing home. Each room contains a list of licenses the resident is subscribed to.

The Bedhub has a Bluetooth low energy profile with different kinds of services. An overview on how the Bluetooth low energy profile should look like is shown in Figure 10. A profile like this is not possible as the Bluetooth stack does not support such a hierarchy. There is no way where services can contain other services. Else a direct mapping could happen between the dynamic service and the dynamically added sensor. Therefore, a new structure is worked out for these services where each service UUID has information about the device and internal service.

Because of the limitations of the Bluetooth Stack we map these on another service hierarchy like shown in Figure 11. In the following, the different services and why they are included in the Bedhub profile will be discussed. These services comprise a set of static services and a set of dynamic services.

The device information service (DIS) is a Bluetooth Specified service. It contains information about the vendor and manufacturer such as the manufacturer name, model number, serial number, hardware, software and/or firmware revision. By using this information, it can always be known which version is used of the Bedhub which device it is and what revision of software, hardware and firmware.

The set of static services may further contain all services with characteristics of the wired connections to the Bedhub. This means that all the physical sensors which are included in the firmware have their own characteristic where the gateway can subscribe to. Figure 12 shows how the static service may be structured.

The set of dynamic services are based on the services provided by BLE sensors which can connect, disconnect and/or reconnect to the Bedhub. For instance, a dynamic service may be based on a BLE thermometer attached to a patient, which is connected to the Bedhub via BLE. The service comprising a characteristic holding the temperature value, can be offered to the Room Gateway via a dynamic service on the Bedhub. As an example, the UUID "00001809-ddef-0000-0000-112233445566" is chosen for this dynamic service. The breakdown of this UUID is shown in the table below.

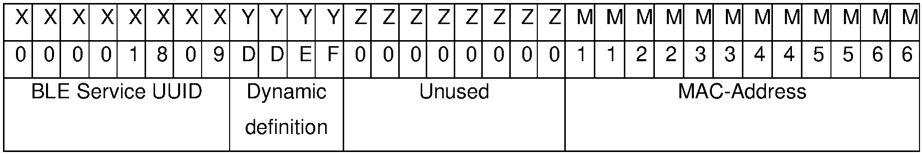

The first four bytes are used to determine the Bluetooth Low Energy service used in the dynamically connected Bluetooth peripheral. In this example the service is the Bluetooth SIG specified Health thermometer service.

The next two bytes (byte 4 and 5) determine if the service is a dynamic service definition. If these bytes are 0xddef it means this is a dynamically added service. If not, this service is not a dynamic service.

The succeeding four bytes are currently unused, these can be used later to add extra data when necessary.

The final six bytes are used to determine what the mac address of the dynamically attached peripheral is. In this example the last 6 bytes are 0x112233445566 which means the MAC address is "11:22:33:44:55:66".

As new devices must be added to the Bedhub and dynamically services will be added and removed there needs to be a way for the gateway to keep track of these changes. This is the reason why a status service is added.

Figure 13 illustrates a sequence diagram for the selection of licenses via a GUI. To select the licenses of a resident the nurse must open a web interface. When the user requests this page the GUI will request the server for the room data with their corresponding licenses as a HTTP request. The server will in turn check the database for the room and licenses and return this data as a HTTP response. The GUI then shows the selected licenses for that resident as shown in Figure 14. Once the user selects or deselects a license for the room it will send a HTTP post to the server.

Once the licenses are pushed to the server it will update the database with the new license data for that room. Next to that it will receive all the characteristics bound to the selected licenses from the database.

Figure 15 illustrates how the Bedhub, which acts as a hub according to the present invention, connects to the Gateway, which acts as a Central according to the present invention, and how the Gateway in its turn may communicate with a server system ("Server") of the nursing home.

When dynamic services are added to the Bedhub they also act as a data source in the bed hub. The Bluetooth low energy sensor will connect with the Bedhub first. After the connection is done the Bedhub adds new services related to the newly added BLE sensor. The gateway can then subscribe to these newly added services of the Bedhub. The Bedhub then also subscribes to that specific service on the BLE sensor. When the data of the BLE sensor changes it will notify the Bedhub. In turn the Bedhub will notify the gateway with this data. This is illustrated in fig. 16.

### Further exemplary embodiments

Figures 17a, 17b and 17c show further exemplary embodiments of the present invention and how they can be implemented in e.g. a caring facility, such as the nursing home of the previous exemplary embodiments. In these figures, the lines connecting the elements are solid for BLE connection using static GATT profiles are exchanged, and dashed for BLE connections using dynamic GATT profiles.

Figure 17a illustrates an embodiment whereby a Gateway present in a room and connected to a server system of the facility via IP, is connected to a number of Bed Hubs related to the beds present in the room using dynamic profiles. Each of these Bed Hubs is connected with static profiles to a number of sensors providing information to the server system of the facility via the respective Bed Hubs and the Gateway of the room.

Figure 17b illustrates a different embodiment, whereby a hub ("ROOM HUB") according to the present invention is present in a number of rooms of a facility. Each Room Hub can be connected to a number of BLE peripherals in the respective room. These BLE peripherals can be sensors, but also e.g. alarm buttons or call buttons for calling assistance, and are connected to the Room Hub with a static profile. The Room Hubs are connected to a Gateway with a dynamic profile. The Gateway can for instance be provided in the hall, and can be connected to the server system of the facility via an IP connection.

Figure 17c illustrates an embodiment combining elements of the previous two embodiments. A first room (left part) is provided with a hub ("Room Hub") in accordance with the present invention. The Room Hub is connected with a number of other BLE devices (three other devices in the shown example) using dynamic profiles. Each of these devices may thus offer services which can change in time. At least one of the BLE devices in the room is also a hub according to the present invention, and is connected to a number of BLE sensors (two sensors in the shown example) using static profiles. The Room hub is connected using a dynamic profile with a Gateway, which can e.g. be connected to a server system via IP. A second room (right part) comprises a Room Gateway which acts as a BLE central according to the present invention, and can be connected to a number of BLE devices (three devices in the shown example), using dynamic profiles. Hereby, each of these devices may thus offer services which can change in time. At least one of the BLE devices in the second room is also a hub according to the present invention, and is connected to a number of BLE sensors (two sensors in the shown example) using static profiles. The room Gateway of the second room can be connected to the server system of the facility via e.g. IP.

In yet a further embodiment of the present invention, the hub of the present invention may be a personal device such as a smartphone configured to act as a hub according to the present invention. Hereby the personal device can be configured to connect to one or more BLE peripheral devices, such as one or more sensors applied on, near or even in the body of the person (for instance a heart rate monitor sensor, or an implanted sensor). The personal device can then be further configured to connect to a Gateway which acts as a BLE central in accordance with the present invention. This Gateway can for instance be a home gateway, installed in the home of the person, or a facility gateway. As a result, the information from the sensors may be communicated via the personal device and either Gateway to a monitoring system. Hereby, the information about the person can be monitored if the person is at home, or is at or near the facility provided with facility gateway.

## Claims

1. A method for clustering Bluetooth Low Energy, BLE, devices, the method comprising:
- providing a hub device configured to act as a Generic Access Profile central, GAP-central, to BLE Peripherals and acting as a GAP-peripheral to a BLE central, wherein the hub device comprises a Generic Attribute Profile, GATT profile, comprising a set of services with characteristics and optionally descriptors, said set of services at least partially related to a first set of BLE peripherals which are connected to the hub device,
- establishing a connection between the hub device and the BLE central whereafter the hub device remains connected to the BLE central;
- changing, after the establishment of the connection, the BLE peripherals connected to the hub device, resulting in a second set of BLE peripherals connected to the hub device;
- updating said GATT profile, wherein the updated GATT profile comprises an updated set of services with characteristics and optionally descriptors which are at least partially related to the second set of BLE peripherals connected to the hub device
and wherein the method further comprises the step of at least partially communicating said updated GATT profile of the hub device to the BLE central via the previously established connection between the hub device and the BLE central.

2. A method according to claim 1, wherein the second set of BLE peripherals connected to the hub device is different from the first set of BLE peripherals connected to the hub device.

3. A method according to any of claims 1 or 2, wherein the hub device is configured with an update notification service which comprises an update status characteristic comprising information concerning the occurrence of an update of the GATT profile of the hub device, preferably wherein the BLE central requests the value of the update status characteristic at intervals and/or wherein the update notification service is implemented as a push-service, wherein the value of the update status characteristic is pushed to the BLE central when said value has changed.

4. A method according to claim 3, wherein in case the update status characteristic value indicates that the GATT profile of the hub device has been updated, the BLE central starts a service discovery protocol during which said updated GATT profile of the hub device is at least partially communicated to the BLE central.

5. A method according to any of claims 1 to 4, wherein the updated GATT profile comprises at least one aggregated service comprising at least one characteristic with a value depending on a combination of characteristic values of at least two BLE peripherals connected to the hub.

6. A method according to any of claims 1 to 5, wherein the GATT profile of the hub comprises a first set of services which is static and a second set of services which is dynamic, wherein the second set of dynamic services comprises a variable set of user defined services, wherein one or more standard services and/or one or more user defined services of BLE peripherals connected to the hub, is mapped into one or more user defined services of the hub, preferably in accordance with any or any combination of the following mapping schemes:
(i) characteristics of each service of a BLE peripheral connected to the hub are mapped into characteristics of a corresponding user defined service on the hub;
(ii) characteristics of at least two services of a BLE peripheral are mapped into a user defined service of the hub which comprising characteristics corresponding to characteristics of said at least two services of the BLE peripheral, and/or
(iii) services with characteristics of a BLE peripheral are mapped into services with characteristics of the hub, whereby a first subset of services of a BLE peripheral is mapped in accordance with (i), and a second subset of services of a BLE peripheral is mapped in accordance with (ii).

7. A method according to any of claims 1 to 6, wherein a first subset of one or more BLE peripherals are connected to the hub device using a connection method wherein a GATT profile of the BLE peripherals of said first subset is communicated to the hub device, and/or wherein a second subset of one or more BLE peripherals are broadcasting to the hub device using advertisements wherein no **GATT** profile of the BLE peripherals of said second subset is communicated to the hub device.

8. A BLE system comprising a BLE central and a hub device according to claim 11,
wherein the hub device is configured to update said **GATT** profile in case of a change in BLE peripherals connected to the hub device from said first set of BLE peripherals to a second set of BLE peripherals,
wherein the updated GATT profile comprises an updated set of services with characteristics and optionally descriptors which are at least partially related to the second set of BLE peripherals connected to the hub device.

9. A BLE system according to claim 8, wherein the second set of BLE peripherals connected to the hub device is different from the first set of BLE peripherals connected to the hub device.

10. A BLE system according to any of claims 8 or 9, wherein the hub device is configured with an update notification service which comprises an update status characteristic comprising information concerning the occurrence of an update of the **GATT** profile of the hub device.

11. A hub device connectable to a Bluetooth Low Energy, BLE, central and connectable to one or more BLE peripherals, wherein the hub device is configured to act as a Generic Access Profile peripheral, GAP-peripheral, to the BLE central and to act as a GAP-central to the BLE peripherals,
wherein the hub device comprises a Generic Attribute profile, **GATT** profile, comprising a set of services with characteristics and optionally descriptors, said set of services at least partially related to a first set of BLE peripherals which are connected to the hub device, wherein the hub device is configured to establish a connection between the hub device and the BLE central whereafter the hub device remains connected to the BLE central,
wherein the hub device is configured to, after the establishment of the connection, update said **GATT** profile in case of a change in BLE peripherals connected to the hub device, wherein the hub device is configured to at least partially communicate the updated GATT profile to the BLE central via the previously established connection between the hub device and the BLE central.

12. A system comprising a hub according to claim 11 and a cluster of BLE peripherals connected to a hub according to claim 11.

## Patentansprüche

1. Verfahren zur Gruppierung von Bluetooth Low Energy, BLE, Vorrichtungen, das Verfahren umfassend:
- Bereitstellen einer Hub-Vorrichtung, die dazu ausgebildet ist, als Generic Access Profile Central, GAP-Zentrale, für BLE-Peripheriegeräte zu fungieren, und als GAP-Peripheriegerät für eine BLE-Zentrale zu fungieren, wobei die Hub-Vorrichtung ein Generic Attribute Profile, GATT-Profil, umfasst, das einen Satz von Diensten mit Eigenschaftenn und optional Deskriptoren umfasst, wobei sich der Satz von Diensten zumindest teilweise auf einen ersten Satz von BLE-Peripheriegeräten bezieht, die mit der Hub-Vorrichtung verbunden sind,
- Herstellen einer Verbindung zwischen der Hub-Vorrichtung und der BLE-Zentrale, wobei die Hub-Vorrichtung mit der BLE-Zentrale verbunden bleibt;
- Wechseln, nach dem Herstellen der Verbindung, der mit der Hub-Vorrichtung verbundenen BLE-Peripheriegeräte, was zur Folge hat, dass ein zweiter Satz von BLE-Peripheriegeräten mit der Hub-Vorrichtung verbunden ist;
- Aktualisieren des GATT-Profils, wobei das aktualisierte GATT-Profil einen aktualisierten Satz von Diensten mit Eigenschaftenn und optional Deskriptoren, die sich zumindest teilweise auf den zweiten Satz von BLE-Peripheriegeräten beziehen, die mit der Hub-Vorrichtung verbunden sind, umfasst;
und wobei das Verfahren ferner den Schritt des zumindest teilweise Übermittels des aktualisierten GATT-Profils der Hub-Vorrichtung über die zuvor hergestellte Verbindung zwischen der Hub-Vorrichtung und der BLE-Zentrale an die BLE-Zentrale umfasst.

2. Verfahren nach Anspruch 1, wobei der zweite Satz von BLE-Peripheriegeräten, die mit der Hub-Vorrichtung verbunden sind, sich von dem ersten Satz von BLE-Peripheriegeräten, die mit der Hub-Vorrichtung verbunden sind, unterscheidet.

3. Verfahren nach einem der Ansprüche 1 oder 2, wobei die Hub-Vorrichtung mit einem Aktualisierungsbenachrichtigungsdienst konfiguriert ist, der eine Aktualisierungsstatuseigenschaft umfasst, die Informationen über das Auftreten einer Aktualisierung des GATT-Profils des Hub-Vorrichtung umfasst, wobei, vorzugsweise, die BLE-Zentrale den Wert der Aktualisierungsstatuseigenschaft in Intervallen anfordert, und/oder wobei der Aktualisierungsbenachrichtigungsdienst als Push-Dienst implementiert ist, wobei der Wert der Aktualisierungsstatuseigenschaft, wenn sich der Wert geändert hat, an die BLE-Zentrale gesendet wird.

4. Verfahren nach Anspruch 3, wobei, falls der Aktualisierungsstatuseigenschaftswert anzeigt, dass das GATT-Profil der Hub-Vorrichtung aktualisiert wurde, die BLE-Zentrale ein Diensterkennungsprotokoll startet, während dem das aktualisierte GATT-Profil der Hub-Vorrichtung zumindest teilweise an die BLE-Zentrale übermittelt wird.

5. Verfahren nach einem der Ansprüche 1 bis 4, wobei das aktualisierte GATT-Profil zumindest einen aggregierten Dienst umfasst, der zumindest eine Eigenschaft mit einem Wert umfasst, der von einer Kombination von Eigenschaftswerten von zumindest zwei mit dem Hub verbundenen BLE-Peripheriegeräten abhängig ist.

6. Verfahren nach einem der Ansprüche 1 bis 5, wobei das GATT-Profil des Hubs einen ersten Satz statischer Dienste und einen zweiten Satz dynamischer Dienste umfasst, wobei der zweite Satz dynamischer Dienste einen variablen Satz benutzerdefinierter Dienste umfasst, wobei
einer oder mehrere Standarddienste und/oder einer oder mehrere benutzerdefinierte Dienste von BLE-Peripheriegeräten, die mit dem Hub verbunden sind, auf einen oder mehrere benutzerdefinierte Dienste des Hubs abgebildet werden, vorzugsweise in Übereinstimmung mit einem der folgenden Abbildungsschemata oder einer Kombination davon:
(i) Eigenschaften jedes Dienstes eines BLE-Peripheriegeräts, das mit dem Hub verbunden ist, werden auf Eigenschaften eines entsprechenden benutzerdefinierten Dienstes auf dem Hub abgebildet;
(ii) Eigenschaften von zumindest zwei Diensten eines BLE-Peripheriegeräts werden auf einen benutzerdefinierten Dienst des Hubs abgebildet, der Eigenschaften umfasst, die den Eigenschaften der zumindest zwei Dienste des BLE-Peripheriegeräts entsprechen, und/oder
(iii) Dienste mit Eigenschaften eines BLE-Peripheriegeräts werden auf Dienste mit Eigenschaften des Hubs abgebildet, wobei eine erste Teilmenge von Diensten eines BLE-Peripheriegeräts gemäß (i) abgebildet wird und eine zweite Teilmenge von Diensten eines BLE-Peripheriegeräts gemäß (ii) abgebildet wird.

7. Verfahren nach einem der Ansprüche 1 bis 6, wobei eine erste Teilmenge eines oder mehrerer BLE-Peripheriegeräte mit der Hub-Vorrichtung verbunden wird, wobei ein Verbindungsverfahren verwendet wird, bei der ein GATT-Profil der BLE-Peripheriegeräte der ersten Teilmenge an die Hub-Vorrichtung übermittelt wird, und/oder wobei eine zweite Teilmenge eines oder mehrerer BLE-Peripheriegeräte unter Verwendung von Ankündigungen an die Hub-Vorrichtung gesendet wird, wobei kein GATT-Profil der BLE-Peripheriegeräte der zweiten Teilmenge an die Hub-Vorrichtung übermittelt wird.

8. BLE-System, umfassend eine BLE-Zentrale und eine Hub-Vorrichtung nach Anspruch 11, wobei die Hub-Vorrichtung so konfiguriert ist, dass es das GATT-Profil im Falle einer Änderung der mit der Hub-Vorrichtung verbundenen BLE-Peripheriegeräte von dem ersten Satz von BLE-Peripheriegeräten zu einem zweiten Satz von BLE-Peripheriegeräten aktualisiert, wobei das aktualisierte GATT-Profil einen aktualisierten Satz von Diensten mit Eigenschaftenn und optional Deskriptoren, die sich zumindest teilweise auf den zweiten Satz von mit der Hub-Vorrichtung verbundenen BLE-Peripheriegeräten beziehen, umfasst.

9. BLE-System nach Anspruch 8, wobei der neue Satz von BLE-Peripheriegeräten, die mit der Hub-Vorrichtung verbunden sind, sich von dem ersten Satz von BLE-Peripheriegeräten, die mit der Hub-Vorrichtung verbunden sind, unterscheidet.

10. BLE-System nach einem der Ansprüche 8 oder 9, wobei die Hub-Vorrichtung mit einem AktualisierungsBenachrichtigungsdienst konfiguriert ist, der eine Aktualisierungsstatuseigenschaft umfasst, die Informationen über das Auftreten einer Aktualisierung des GATT-Profils der Hub-Vorrichtung umfasst.

11. Hub-Vorrichtung, die mit einer Bluetooth Low Energy, BLE, Zentrale verbunden werden kann und mit einem oder mehreren BLE-Peripheriegeräten verbunden werden kann,
wobei die Hub-Vorrichtung dazu ausgebildet ist, als Generic Access Profile Peripheral, GAP-Peripheriegerät, für die BLE-Zentrale zu fungieren, und als GAP-Zentrale für die BLE-Peripheriegeräte zu fungieren,
wobei die Hub-Vorrichtung ein Generic Attribute Profile, GATT-Profil, umfasst, das einen Satz von Diensten mit Eigenschaften und optional Deskriptoren umfasst, wobei sich der Satz von Diensten zumindest teilweise auf einen ersten Satz von BLE-Peripheriegeräten bezieht, die mit der Hub-Vorrichtung verbunden sind,
wobei die Hub-Vorrichtung dazu ausgebildet ist, eine Verbindung zwischen der Hub-Vorrichtung und der BLE-Zentrale herzustellen, wobei die Hub-Vorrichtung mit der BLE-Zentrale verbunden bleibt,
wobei die Hub-Vorrichtung dazu ausgebildet ist, nach dem Herstellen der Verbindung, im Falle eines Wechsels der mit der Hub-Vorrichtung verbundenen BLE-Peripheriegeräte das GATT-Profil zu aktualisieren, wobei die Hub-Vorrichtung dazu ausgebildet ist, das aktualisierte GATT-Profil zumindest teilweise über die zuvor hergestellte Verbindung zwischen der Hub-Vorrichtung und der BLE-Zentrale an die BLE-Zentrale zu übermitteln.

12. System, umfassend einen Hub nach Anspruch 11 und eine Gruppe von BLE-Peripheriegeräten, die mit einem Hub nach Anspruch 11 verbunden sind.

## Revendications

1. Procédé de regroupement de dispositifs Bluetooth Basse Énergie (BLE), le procédé comprenant :
- la fourniture d'un dispositif concentrateur configuré pour agir en tant que central de Profil d'Accès Générique, central GAP, pour les périphériques BLE et agissant en tant que périphérique GAP pour un central BLE, dans lequel le dispositif concentrateur comprend un Profil d'Attribut Générique, Profil GATT, comprenant un ensemble de services avec des caractéristiques et de manière optionnelle des descripteurs, ledit ensemble de services étant au moins partiellement lié à un premier ensemble de périphériques BLE qui sont connectés au dispositif concentrateur,
- l'établissement d'une connexion entre le dispositif concentrateur et le central BLE, après quoi le dispositif concentrateur reste connecté au central BLE ;
- le changement, après l'établissement de la connexion, des périphériques BLE connectés au dispositif concentrateur, résultant en un second ensemble de périphériques BLE connectés au dispositif concentrateur ;
- la mise à jour dudit profil GATT, dans lequel le profil GATT mis à jour comprend un ensemble mis à jour de services avec des caractéristiques et de manière optionnelle des descripteurs qui sont au moins partiellement liés au second ensemble de périphériques BLE connectés au dispositif concentrateur,
et dans lequel le procédé comprend en outre l'étape consistant à communiquer au moins partiellement ledit profil GATT mis à jour du dispositif concentrateur au central BLE via la connexion préalablement établie entre le dispositif concentrateur et le central BLE.

2. Procédé selon la revendication 1, dans lequel le second ensemble de périphériques BLE connectés au dispositif concentrateur est différent du premier ensemble de périphériques BLE connectés au dispositif concentrateur.

3. Procédé selon l'une quelconque des revendications 1 ou 2, dans lequel le dispositif concentrateur est configuré avec un service de notification de mise à jour qui comprend une caractéristique d'état de mise à jour comprenant des informations concernant la survenance d'une mise à jour du profil GATT du dispositif concentrateur, de préférence dans lequel le central BLE demande la valeur de la caractéristique d'état de mise à jour à intervalles et/ou dans lequel le service de notification de mise à jour est mis en œuvre sous forme de service de type poussée, dans lequel la valeur de la caractéristique d'état de mise à jour est poussée vers le central BLE lorsque ladite valeur a changé.

4. Procédé selon la revendication 3, dans lequel, si la valeur de caractéristique d'état de mise à jour indique que le profil GATT du dispositif concentrateur a été mis à jour, le central BLE lance un protocole de découverte de service pendant lequel ledit profil GATT mis à jour du dispositif concentrateur est au moins partiellement communiqué au central BLE.

5. Procédé selon l'une quelconque des revendications 1 à 4, dans lequel le profil GATT mis à jour comprend au moins un service agrégé comprenant au moins une caractéristique avec une valeur dépendant d'une combinaison de valeurs de caractéristique d'au moins deux périphériques BLE connectés au concentrateur.

6. Procédé selon l'une quelconque des revendications 1 à 5, dans lequel le profil GATT du concentrateur comprend un premier ensemble de services qui est statique et un second ensemble de services qui est dynamique, dans lequel le second ensemble de services dynamiques comprend un ensemble variable de services définis par l'utilisateur, dans lequel un ou plusieurs services standards et/ou un ou plusieurs services définis par l'utilisateur de périphériques BLE connectés au concentrateur sont mappés dans un ou plusieurs services définis par l'utilisateur du concentrateur, de préférence selon l'un quelconque ou n'importe quelle combinaison des schémas de mappage suivants :
(i) les caractéristiques de chaque service d'un périphérique BLE connecté au concentrateur sont mappées dans les caractéristiques d'un service correspondant défini par l'utilisateur sur le concentrateur ;
(ii) les caractéristiques d'au moins deux services d'un périphérique BLE sont mappées dans un service défini par l'utilisateur du concentrateur qui comprend des caractéristiques correspondant aux caractéristiques desdits au moins deux services du périphérique BLE, et/ou
(iii) les services avec des caractéristiques d'un périphérique BLE sont mappés dans des services avec des caractéristiques du concentrateur, de sorte qu'un premier sous-ensemble de services d'un périphérique BLE est mappé selon (i), et qu'un second sous-ensemble de services d'un périphérique BLE est mappé selon (ii).

7. Procédé selon l'une quelconque des revendications 1 à 6, dans lequel un premier sous-ensemble d'un ou plusieurs périphériques BLE est connecté au dispositif concentrateur en utilisant un procédé de connexion dans lequel un profil GATT des périphériques BLE dudit premier sous-ensemble est communiqué au dispositif concentrateur, et/ou dans lequel un second sous-ensemble d'un ou plusieurs périphériques BLE diffusent vers le dispositif concentrateur en utilisant des annonces dans lesquelles aucun profil GATT des périphériques BLE dudit second sous-ensemble n'est communiqué au dispositif concentrateur.

8. Système BLE comprenant un central BLE et un dispositif concentrateur selon la revendication 11,
dans lequel le dispositif concentrateur est configuré pour mettre à jour ledit profil GATT en cas de changement de périphériques BLE connectés au dispositif concentrateur, passant dudit premier ensemble de périphériques BLE à un second ensemble de périphériques BLE,
dans lequel le profil GATT mis à jour comprend un ensemble mis à jour de services avec des caractéristiques et de manière optionnelle des descripteurs qui sont au moins partiellement liés au second ensemble de périphériques BLE connectés au dispositif concentrateur.

9. Système BLE selon la revendication 8, dans lequel le second ensemble de périphériques BLE connectés au dispositif concentrateur est différent du premier ensemble de périphériques BLE connectés au dispositif concentrateur.

10. Système BLE selon l'une quelconque des revendications 8 ou 9, dans lequel le dispositif concentrateur est configuré avec un service de notification de mise à jour qui comprend une caractéristique d'état de mise à jour comprenant des informations concernant la survenance d'une mise à jour du profil GATT du dispositif concentrateur.

11. Dispositif concentrateur pouvant être connecté à un central Bluetooth Basse Énergie, BLE, et pouvant être connecté à un ou plusieurs périphériques BLE, dans lequel le dispositif concentrateur est configuré pour agir en tant que périphérique de Profil d'Accès Générique, périphérique GAP, pour le central BLE et pour agir en tant que central GAP pour les périphériques BLE,
dans lequel le dispositif concentrateur comprend un profil d'Attribut Générique, profile GATT, comprenant un ensemble de services avec des caractéristiques et de manière optionnelle des descripteurs, ledit ensemble de services étant au moins partiellement lié à un premier ensemble de périphériques BLE qui sont connectés au dispositif concentrateur,
dans lequel le dispositif concentrateur est configuré pour établir une connexion entre le dispositif concentrateur et le central BLE après quoi le dispositif concentrateur reste connecté au central BLE,
dans lequel le dispositif concentrateur est configuré pour, après l'établissement de la connexion, mettre à jour ledit profil GATT en cas de changement de périphériques BLE connectés au dispositif concentrateur,
dans lequel le dispositif concentrateur est configuré pour communiquer au moins partiellement le profil GATT mis à jour au central BLE via la connexion préalablement établie entre le dispositif concentrateur et le central BLE.

12. Système comprenant un concentrateur selon la revendication 11 et un groupe de périphériques BLE connectés à un concentrateur selon la revendication 11.
